# EUROPÄISCHE PATENTSCHRIFT

(11) **EP 3 545 047 B1**
(45) Veröffentlichungstag und Bekanntmachung des Hinweises auf die Patenterteilung: **11.01.2023**
(21) Anmeldenummer: 17797647.9
(22) Anmeldetag: 14.11.2017
(51) Int. Cl.: C09K 5/20, H01M 8/04

(54) **KÜHLMITTEL FÜR KÜHLSYSTEME IN ELEKTROFAHRZEUGEN MIT BRENNSTOFFZELLEN UND/ODER BATTERIEN ENTHALTEND AZOLDERIVATE UND ZUSÄTZLICHE KORROSIONSSCHUTZMITTEL**
COOLING AGENTS FOR COOLING SYSTEMS IN ELECTRIC VEHICLES WITH FUEL CELLS AND/OR BATTERIES CONTAINING AZOLE DERIVATIVES AND ADDITIONAL CORROSION INHIBITORS
RÉFRIGÉRANT POUR SYSTÈME DE REFROIDISSEMENT DANS DES VÉHICULES ÉLECTRIQUES COMPRENANT DES PILES À COMBUSTIBLE ET/OU DES BATTERIES COMPRENANT DES DÉRIVÉS D'AZOLE ET UN AGENT ANTICORROSION SUPPLÉMENTAIRE

(30) Priorität: 23.11.2016 EP 16200197
(43) Veröffentlichungstag der Anmeldung: 02.10.2019
(73) Patentinhaber: BASF SE, 67056 Ludwigshafen am Rhein (DE)
(72) Erfinder: DIETL, Harald, 67056 Ludwigshafen (DE); SIEG, Roger, 67056 Ludwigshafen (DE)
(74) Vertreter: BASF IP Association
(86) Internationale Anmeldenummer: PCT/EP2017/079162
(87) Internationale Veröffentlichungsnummer: WO 2018/095759

(56) Entgegenhaltungen:
- EP-A1- 2 549 575
- EP-A1- 2 888 386
- EP-B1- 2 549 575
- EP-B1- 2 888 386
- US-A- 3 931 029
- US-A- 4 704 220
- US-A1- 2003 052 302
- US-A1- 2012 064 426
- US-A1- 2012 288 404

## Beschreibung

Die vorliegende Erfindung betrifft Kühlmittel für Kühlsysteme in Elektrofahrzeugen mit Brennstoffzellen und/oder Batterien, bevorzugt in Kraftfahrzeugen, besonders bevorzugt in Personen- und Nutzfahrzeugen (sogenannte light und heavy duty Fahrzeuge), auf Basis von Alkylenglykolen oder deren Derivaten, welche neben speziellen Azolderivaten zusätzliche Korrosionsinhibitoren für einen verbesserten Korrosionsschutz enthalten.

Brennstoffzellen und/oder Batterien für den mobilen Einsatz, besonders in Kraftfahrzeugen, müssen auch bei niedrigen Außentemperaturen von bis zu etwa -40°C betrieben werden können. Ein frostgeschützter Kühlmittelkreislauf ist deshalb unerlässlich.

Die Verwendung von bei Verbrennungsmotoren eingesetzten herkömmlichen Kühlerschutzmitteln wäre bei Brennstoffzellen und/oder Batterien ohne eine vollständige elektrische Isolierung der Kühlkanäle nicht möglich, da diese Mittel wegen der darin als Korrosionsinhibitoren enthaltenen Salze und ionisierbaren Verbindungen eine zu hohe elektrische Leitfähigkeit haben, was die Funktion der Brennstoffzelle oder Batterie negativ beeinträchtigen würde.

Die DE-A 198 02 490 (1) beschreibt Brennstoffzellen mit einem frostgeschützten Kühlkreislauf, bei dem als Kühlmittel eine paraffinische Isomerenmischung mit einem Pour Point von kleiner als -40°C verwendet wird. Nachteilig ist jedoch die Brennbarkeit eines solchen Kühlmittels.

Aus der EP-A 1 009 050 (2) ist ein Brennstoffzellensystem für Automobile bekannt, bei dem als Kühlmedium Luft verwendet wird. Nachteilig ist dabei allerdings, daß Luft bekanntlich ein schlechterer Wärmeleiter als ein flüssiges Kühlmedium ist.

Die WO 00/17951 (3) beschreibt ein Kühlsystem für Brennstoffzellen, bei dem als Kühlmittel ein reines Monoethylenglykol/Wasser-Gemisch im Verhältnis 1:1 ohne Additive eingesetzt wird. Da wegen fehlender Korrosionsinhibitoren keinerlei Korrosionsschutz gegenüber den im Kühlsystem vorhandenen Werkstoffen vorhanden wäre, enthält der Kühlkreislauf eine lonenaustauschereinheit, um die Reinheit des Kühlmittels zu erhalten und um längere Zeit eine niedrige spezifische Leitfähigkeit zu gewährleisten, wodurch Kurzschlüsse und Korrosion verhindert werden. Als geeignete Ionenaustauscher werden anionische Harze wie zum Beispiel vom stark alkalischen Hydroxyl-Typ und kationische Harze wie zum Beispiel auf Sulfonsäuregruppen-Basis sowie andere Filtrationseinheiten wie zum Beispiel Aktivkohlefilter genannt.

Der Aufbau und die Funktionsweise einer Brennstoffzelle für Automobile, insbesondere einer Brennstoffzelle mit elektronenleitender Elektrolytmembran ("PEM-Brennstoffzelle", "polymer electrolyte membrane fuel cell") ist in (3) exemplarisch beschrieben, wobei als bevorzugte Metallkomponente im Kühlkreislauf (Kühler) Aluminium bevorzugt wird.

WO 02/101848 A2 beschreibt Gefrierschutzmittel für Kühlsysteme in Brennstoffzellenantrieben und deren Konzentrate, die bestimmte Azolderivate enthalten.

Die Gefrierschutzmittel zeigen bereits einen guten Korrosionsschutz an Aluminiumproben, genügen jedoch modernen Anforderungen hinsichtlich Eisen und Buntmetallkorrosion nicht mehr.

Die DE-A 100 63 951 (4) beschreibt Kühlmittel für Kühlsysteme in Brennstoffzellenantrieben, die ortho-Kieselsäureester als Korrosionsinhibitoren enthalten.

Aus US 2012/0064426 A1 sind Kühlmittel für Brennstoffzellen, die einen lonentauscher enthalten, bekannt, die neben Ethylenglykol oder Propylenglykol als Gefrierschutzkomponente und Inhibitoren, wie z.B. u.a. Azolen, gegen Aluminiumkorrosion auch Polyoxyethylenalkylether oder Polyoxyethylen Fettsäureester als oberflächenaktive Mittel enthalten.

Außer Aluminiumkorrosion wird keine weitere Korrosion betrachtet und die eingesetzten Polyoxyethylenalkylether oder Polyoxyethylen Fettsäureester werden ausschließlich als oberflächenaktive Mittel eingesetzt.

Ein Hauptproblem bei Kühlsystemen in Brennstoffzellenantrieben ist gegenüber konventionellen Kühlmitteln die Aufrechterhaltung einer niedrigen elektrischen Leitfähigkeit des Kühlmittels, um eine sichere und störungsfreie Funktion der Brennstoffzelle und damit verbundener Batterien zu gewährleisten und dauerhaft Kurzschlüsse und Korrosion zu verhindern.

Aus US 3931029 sind Gefrierschutzzusammensetzungen bekannt, die neben Ethylenglykol oder Diethylenglykol als Gefrierschutzkomponente und alkoxylierten höheren Fettsäuren oder Fettaminen als Entschäumer auch anorganische Verbindungen als weitere Inhibitoren enthalten.

Diese anorganischen Verbindungen in diesen Zusammensetzungen werden bevorzugt als Alkali- oder Ammoniumsalze eingesetzt, so daß die Zusammensetzungen einen signifikanten Anteil an ionischen Bestandteilen enthalten, so daß diese aufgrund ihrer inhärenten Leitfähigkeit nicht für den Einsatz in Brennstoffzellen geeignet sind.

Aus WO 2014 029654 A1 sind Korrosionsschutzmittel-Formulierungen bekannt, die neben Glykolen und Polyalkylenglykolen als Gefrierschutzkomponente und Alkylaminethoxylaten als Tensidkomponente noch weitere Zusätzen enthalten können. Bei der Auswahl solcher Zusätze wird nicht auf die Leitfähigkeit geachtet, so werden auch anionische und kationische Tenside offenbart, Borax zur Einstellung des pH und Carbonsäuren in Form ihrer Salze.

Somit enthalten auch diese Zusammensetzungen einen signifikanten Anteil an ionischen Bestandteilen und sind aufgrund ihrer inhärenten Leitfähigkeit nicht für den Einsatz in Brennstoffzellen geeignet.

Das gleiche gilt für US 4704220, in der Zusammensetzungen, enthaltend mindestens einen Emulgator und mindestens ein organisches Hydrophobierungsagens, beschrieben werden, die als Konzentrate nach Verdünnung mit Wasser als Kühlmittel eingesetzt werden können. Das organische Hydrophobierungsagens trägt salzbildende Gruppen und bei dem Emulgator kann es sich auch um anionische oder kationische Verbindungen handeln. Dem Wasser, mit dem die Zusammensetzungen in den Beispielen versetzt werden, werden gezielt anorganische Verbindungen zugesetzt.

Somit enthalten auch diese Zusammensetzungen einen signifikanten Anteil an ionischen Bestandteilen und sind aufgrund ihrer inhärenten Leitfähigkeit nicht für den Einsatz in Brennstoffzellen geeignet.

EP 2549575 A1 beschreibt rein wäßrige Kühlmittel, die optional 0,1 % Tensid enthalten können. Als Tensid wird ein ethoxyliertes/propoxyliertes Decanol beschrieben.

Die Anwesenheit von Alkylenglykolen oder deren Derivaten oder von Azolderivaten wird nicht beschrieben.

US 2003/0052302 beschreibt Kühlmittel auf Basis 1,3-Propandiol, die weiterhin bestimmte Thiazolderivate enthalten können. Die Anwesenheit von organischen Buntmetallkorrosionsinhibitoren wird nicht beschrieben.

Aufgabe der vorliegenden Erfindung war es, die aus WO 02/101848 A2 bekannten Gefrierschutzmittel auch gegenüber anderen Metallen als Aluminium korrosionsfester auszugestalten.

Es wurde nun gefunden, daß sich die Zeitdauer für eine niedrige elektrische Leitfähigkeit in einem Kühlsystem auf Basis Alkylenglykol/Wasser, auch und insbesondere wenn es gemäß (3) einen integrierten Ionenaustauscher enthält, durch die Zugabe geringer Mengen von Azolderivaten deutlich verlängern läßt. Der gemäß der WO 02/101848 A2 gute Schutz von Aluminium und aluminiumhaltigen Legierungen gegen Korrosion wird durch den erfindungsgemäßen Einsatz der Verbindungen (V), (VI) und/oder (VII) auch für andere Metalle geboten, besonders Eisenwerkstoffe, eisenhaltige Legierungen und Buntmetalle, unter diesen besonders Kupfer und Messing. Dies bietet für die Praxis den Vorteil, daß sich die Zeitintervalle zwischen zwei Kühlmittelwechseln bei Brennstoffzellen weiter ausdehnen lassen, was insbesondere im Automobilsektor von Interesse ist.

Gegenstand der vorliegenden Erfindung sind Kühlmittelzusammensetzungen mit einer Leitfähigkeit von maximal 50 µS/cm für Kühlsysteme in Brennstoffzellen und/oder Batterien, enthaltend
(a) 10 bis 90 Gew.-% mindestens eines Alkylenglykols oder deren Derivate,
(b) 90 bis 10 Gew.-% ionenfreies, bevorzugt destilliertes, bidestilliertes oder entionisiertes Wasser,
(c) 0,005 bis 5 Gew.-%, insbesondere 0,0075 bis 2,5 Gew.-%, vor allem 0,01 bis 1 Gew.-% einer oder mehrerer fünfgliedriger heterocyclischer Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, ausgewählt aus der Gruppe bestehend aus anellierten Imidazolen und anellierten 1,2,3-Triazolen der allgemeinen Formel 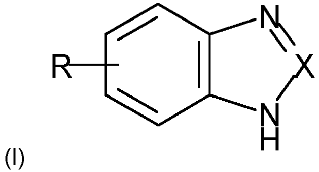 oder 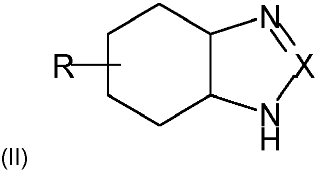 in denen die Variable
   R Wasserstoff oder einen C₁- bis C₁₀-Alkylrest, insbesondere Methyl oder Ethyl, bedeutet und die Variable X ein Stickstoffatom oder die Gruppierung C-H bezeichnet,
   sowie
   Benzthiazole der allgemeinen Formel (III) 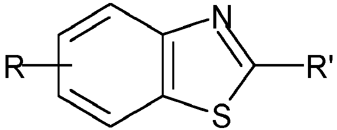 in der
   die Variable R die oben genannte Bedeutung hat und
   die Variable R' Wasserstoff, einen C₁- bis C₁₀-Alkylrest, insbesondere Methyl oder Ethyl, oder
   insbesondere eine Mercaptogruppe(-SH) bezeichnet,
(d) gegebenenfalls mindestens einen ortho-Kieselsäureester
   dadurch gekennzeichnet, daß sie zusätzlich
(e) 0,05 bis 5 Gew.-%, insbesondere 0,1 bis 1 Gew.-%, vor allem 0,2 bis 0,5 Gew.-% mindestens eine der Verbindungen
   der allgemeinen Formel (V) 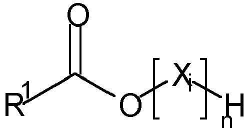 , der allgemeinen Formel (VI) 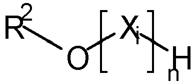 sowie der allgemeinen Formel (VII) 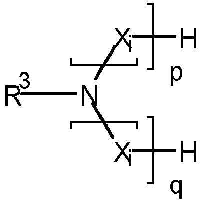 worin
   R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
   R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
   R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
   n eine positive ganze Zahl von 10 bis 60, bevorzugt 12 bis 50, besonders bevorzugt 15 bis 40, ganz besonders bevorzugt 18 bis 30 und insbesondere 20 bis 25,
   p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
   jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
   bedeuten,
   enthalten,
   wobei die Summe aller Komponenten hierbei 100 Gew.-% beträgt.

Ein weiterer Gegenstand sind wasserfreie oder bis zu 10 Gew% Wasser enthaltende Gefrierschutzmittelkonzentrate für Kühlsysteme in Brennstoffzellen und/oder Batterien gefunden, aus welchen gebrauchsfertige wäßrige Kühlmittelzusammensetzungen mit einer Leitfähigkeit von maximal 50 µS/cm resultieren, auf Basis von Alkylenglykolen oder deren Derivaten gefunden, welche eine oder mehrere fünfgliedrige heterocyclische Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, und zusätzlich mindestens eine der Verbindungen (V), (VI) und/oder (VII) enthalten. Bevorzugt werden hierbei Gefrierschutzmittelkonzentrate, welche insgesamt 0,05 bis 5 Gew.-%, insbesondere 0,075 bis 2,5 Gew.-%, vor allem 0,1 bis 1 Gew.-% der genannten Azolderivate enthalten. Bevorzugt werden hierbei Gefrierschutzmittel, welche insgesamt 0,05 bis 5 Gew.-%, insbesondere 0,1 bis 1 Gew.-%, vor allem 0,2 bis 0,5 Gew.-% mindestens einer der Verbindungen (V), (VI) und/oder (VII) enthalten.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 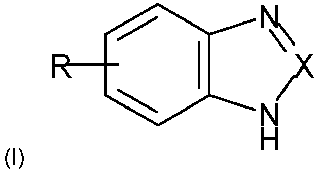 oder 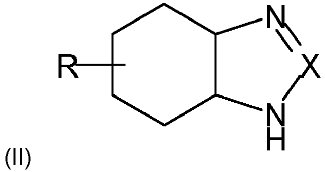 in denen die Variable
R Wasserstoff oder einen C₁- bis C₁₀-Alkylrest, insbesondere Methyl oder Ethyl, bedeutet und die Variable X ein Stickstoffatom oder die Gruppierung C-H bezeichnet.

Typische und bevorzugte Beispiele für Azolderivate der allgemeinen Formel (I) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (II) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (III) 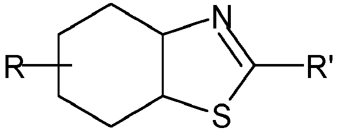 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe(-SH) bezeichnet. Ein typisches Beispiel für ein Azolderivat der allgemeinen Formel (III) ist 2-Mercaptobenzthiazol.

Weiterhin werden nicht-anellierte Azolderivate der allgemeinen Formel (IV) 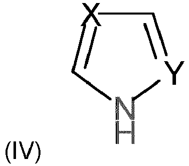 in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, 2-Mercaptobenzthiazol hydriertes Tolutriazol oder Mischungen hieraus, insbesondere Benzotriazol oder Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 (5) zugänglich und auch kommerziell verfügbar.

Neben den genannten Azolderivaten enthalten die erfindungsgemäßen Gefrierschutzmittelkonzentrate vorzugsweise zusätzlich ortho-Kieselsäureester, wie sie in (4) beschrieben werden. Typische Beispiele für derartige ortho-Kieselsäureester sind Tetraalkoxysilane, wie bevorzugt Tetramethoxysilan und Tetraethoxysilan, und Alkoxyalkylsilane, wie bevorzugt Triethoxymethylsilan, Diethoxydimethylsilan, Ethoxytrimethylsilan, Trimethoxymethylsilan, Dimethoxydimethylsilan und Methoxytrimethylsilan. Bevorzugt sind die Tetraalkoxysilane, besonders bevorzugt Tetramethoxysilan und Tetraethoxysilan, ganz besonders bevorzugt ist Tetraethoxysilan. Bevorzugt werden hierbei Gefrierschutzmittelkonzentrate, insbesondere solche mit einem Gehalt an insgesamt 0,05 bis 5 Gew.-% der genannten Azolderivate, aus welchen gebrauchsfertige wäßrige Kühlmittelzusammensetzungen mit einem Siliziumgehalt von 2 bis 2000 Gew.-ppm Silizium, insbesondere 25 bis 500 Gew.-ppm Silizium, resultieren.

Erfindungsgemäß ist in den Gefrierschutzmitteln und Gefrierschutzkonzentraten der vorliegenden Erfindung mindestens eine Verbindung ausgewählt aus der Gruppe bestehend aus Verbindungen der Formel (V), Verbindungen der Formel (VI), Verbindungen der Formel (VII) und Mischungen daraus enthalten.

Dabei handelt es sich um Verbindungen der allgemeinen Formel (V) 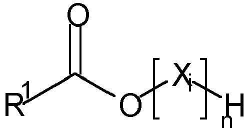 , der allgemeinen Formel (VI) 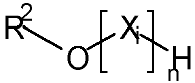 sowie der allgemeinen Formel (VII) 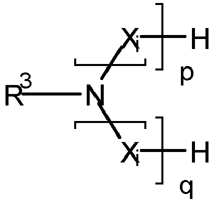 worin
R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
n eine positive ganze Zahl von 10 bis 60, bevorzugt 12 bis 50, besonders bevorzugt 15 bis 40, ganz besonders bevorzugt 18 bis 30 und insbesondere 20 bis 25,
p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten.

Es ist zu beachten, dass es sich bei den Verbindungen der Formeln (V), (VI) und (VII) zumeist um Reaktionsgemische mit einer Verteilung der Produktzusammensetzung je nach Reaktionsbedingungen handelt. So ist die Länge der Kette -[-Xᵢ-]- einer Verteilung um einen statistischen Mittelwert unterworfen, so daß die Werte für n, p und q um einen statistischen Mittelwert verteilt sein können. So nimmt der Wert für n, p und q für jede einzelne Verbindung der Formel (V), (VI) oder (VII) positive ganzzahlige Zahlen an, kann für das Reaktionsgemisch im statistischen Mittel auch nicht-ganzzahlige Werte annehmen.

Unter diesen sind Verbindungen der Formel (V) und (VII) bevorzugt, besonders bevorzugt sind Verbindungen der Formel (VII).

In einer bevorzugten Ausführungsform der vorliegenden Erfindung ist das Strukturelement R¹-COO- in Formel (V) abgeleitet von Fettsäuren oder Gemischen davon, bevorzugt von 2-Ethylhexansäure, Octansäure (Caprylsäure), Pelargonsäure (Nonansäure), 2-Propylheptansäure, Decansäure (Caprinsäure), Undecansäure, Dodecansäure (Laurinsäure), Tridecansäure, Tetradecansäure (Myristinsäure), Pentadecansäure, Palmitinsäure (Hexadecansäure), Palmitoleinsäure [(9*Z*)-Hexadec-9-ensäure], Margarinsäure (Heptadecansäure), Stearinsäure (Octadecansäure), Ölsäure [(9Z)-Octadec-9-ensäure], Elaidinsäure [(9*E*)-Octadec-9-ensäure], Linolsäure [(9*Z*,12*Z*)-Octadeca-9,12-diensäure], Linolensäure [(9*Z*,12*Z*,15*Z*)-Octadeca-9, 12, 15-triensäure], Elaeostearinsäure [(9*Z*,11*E*,13*E*)-Octadeca-9,11,13-triensäure], Ricinolsäure ((R)-12-Hydroxy-(Z)-octadec-9-ensäure), Isoricinolsäure [(S)-9-Hydroxy-(*Z*)-octadec-12-ensäure], Nonadecansäure, Arachinsäure (Eicosansäure), Behensäure (Docosansäure) und Erucasäure [(13*Z*)-Docos-13-ensäure].

Unter diesen bevorzugt ist das Strukturelement R¹-COO- in Formel (V) abgeleitet von Decansäure (Caprinsäure), Dodecansäure (Laurinsäure), Tetradecansäure (Myristinsäure), Palmitinsäure (Hexadecansäure), Palmitoleinsäure [(9*Z*)-Hexadec-9-ensäure], Stearinsäure (Octadecansäure), Ölsäure [(9*Z*)-Octadec-9-ensäure] oder Arachinsäure (Eicosansäure), besonders bevorzugt von Tetradecansäure (Myristinsäure), Palmitinsäure (Hexadecansäure), Palmitoleinsäure [(9*Z*)-Hexadec-9-ensäure], Stearinsäure (Octadecansäure), Ölsäure [(9*Z*)-Octadec-9-ensäure], Ricinolsäure ((R)-12-Hydroxy-(Z)-octadec-9-ensäure), Isoricinolsäure [(*S*)-9-Hydroxy-(*Z*)-octadec-12-ensäure] oder Arachinsäure (Eicosansäure), ganz besonders bevorzugt von Palmitinsäure (Hexadecansäure), Palmitoleinsäure [(9*Z*)-Hexadec-9-ensäure], Stearinsäure (Octadecansäure), Ölsäure [(9*Z*)-Octadec-9-ensäure] oder Arachinsäure (Eicosansäure) und insbesondere von Stearinsäure (Octadecansäure).

Insbesondere zu nennen sind deren zwanzigfach, vierzigfach und sechzigfach ethoxyliertenAlkoxylate.

In einer weiteren bevorzugten Ausführungsform kann es sich um Fettsäuregemische handeln, die technisch aus der Aufarbeitung natürlicher, pflanzlicher oder tierischer Fette und Öle erhältlich sind, besonders bevorzugt aus Leinöl, Kokosfett, Palmkernöl, Palmöl, Sojaöl, Erdnußöl, Kakaobutter, Sheabutter, Baumwollsaatöl, Maiskeimöl, Sonnenblumenöl, Rapsöl oder Ricinusöl, ganz besonders bevorzugt aus Leinöl, Palmöl, Sojaöl, Erdnußöl, Kakaobutter, Sheabutter, Baumwollsaatöl, Maiskeimöl, Sonnenblumenöl, Rapsöl oder Ricinusöl.

Dabei kann es sich auch um Gemische gesättigter und ungesättigter Fettsäuren handeln. Die Verbindungen (V) sind beispielsweise erhältlich durch Umsetzung der betreffenden Säuren oder Ester, bevorzugt der C₁-C₄-Alkylester oder Glyceride, mit dem Strukturelement R¹-COO- in Formel (V) mit dem jeweiligen Alkohol HO-[-Xᵢ-]ₙ-H in einer Veresterung oder einer Umesterung unter an sich bekannten Bedingungen.

Bevorzugt werden jedoch die betreffenden Säuren R¹-COOH oder deren Salze mit Alkylenoxiden bis zu dem gewünschten mittleren statistischen Alkoxylierungsgrad umgesetzt, bevorzugt unter basischen Bedingungen. Dies ist dann besonders bevorzugt, wenn die Struktureinheit Xᵢ abgeleitet ist von Ethylenoxid oder Propylenoxid, bevorzugt von Ethylenoxid.

Die Verbindungen (V) verringern erfindungsgemäß die Korrosion, besonders die Buntmetallkorrosion, können aber auch andere Wirkungen in den erfindungsgemäßen Kühlmittelzusammensetzungen erfüllen, beispielsweise zur Verringerung der Schaumbildung (Entschäumer, Defoamer, Anti-Schaummittel). Bevorzugt sind unter den Verbindungen (V) solche, die sowohl die Schaumbildung als auch die Korrosion, besonders die Buntmetallkorrosion verringern, besonders bevorzugt sind solche, die die Schaumbildung nicht nennenswert beeinflussen, aber die Korrosion, besonders die Buntmetallkorrosion verringern.

In den Verbindungen der Formel (VI) ist das Strukturelement R²-O- bevorzugt abgeleitet von Fettalkoholen, die bevorzugt durch Hydrierung von Fettsäuren und Estern erhältlich sind, besonders bevorzugt durch Hydrierung der oben genannten Fettsäuren. Somit handelt es sich bei dem Rest R² in einer besonderen Ausführungsform um einen Rest R¹-CH₂-. Die Ausführungen zu den Fettsäuren gelten damit analog auch für die Fettalkohole.

In einer bevorzugten Ausführungsform handelt es sich bei den Fettalkoholen um Octylalkohol (Caprylalkohol), Nonylalkohol (Pelargonylalkohol), Decylalkohol (Caprinalkohol), Undecylalkohol, Dodecylalkohol (Laurylalkohol), Tridecylalkohol, Tetradecylalkohol (Myristylalkohol), Pentadecylalkohol, Hexadecylalkohol (Cetylalkohol, Palmitylalkohol), Heptadecylalkohol, Octadecylalkohol (Stearylalkohol), Oleylalkohol, Elaidylalkohol, Linoleylalkohol, Linolenoylalkohol, Nonadecylalkohol, Eicosylalkohol (Arachylalkohol) oder deren Gemische.

In einer bevorzugten Ausführungsform handelt es sich bei den Verbindungen der Formel (VI) um alkoxylierte Ricinusöle, besonders bevorzugt hydrierte alkoxylierte Ricinusöle, ganz besonders bevorzugt ethoxylierte, propoxylierte und/oder butoxylierte Ricinusöle, insbesondere ethoxylierte Ricinusöle.

Weitere Beispiele für Alkohole mit dem Strukturelement R²-O- sind n-Octanol, 2-Ethylhexanol, 2-Propylheptanol, Tridekanol-Isomerengemische und Heptadekanol-Isomerengemische.

Insbesondere zu nennen sind deren zwanzigfach und vierzigfach ethoxyliertenAlkoxylate.

Bei einem Tridekanol-Isomerengemisch als zugrundeliegendem Alkohol R²-OH handelt sich um ein Gemisch aus 13 Kohlenstoffatome aufweisenden Alkoholen, besonders bevorzugt um ein solches, das durch Hydroformylierung aus eine C₁₂-Olefingemisch erhältlich ist, das seinerseits durch Oligomerisierung eines Olefingemisches erhältlich ist, das überwiegend vier Kohlenstoffatome aufweisende Kohlenwasserstoffe enthält.

Im statistischen Mittel weist dieses Olefingemisch 11 bis 13 Kohlenstoffatome auf, bevorzugt 11,1 bis 12,9, besonders bevorzugt 11,2 bis 12,8, ganz besonders bevorzugt 11,5 bis 12,5 und insbesondere 11,8 bis 12,2.

In einer ganz besonders bevorzugten Ausführungsform weist dieser Alkohol R¹-OH einen mittleren Verzweigungsgrad, gemessen als ISO-Index, von 2,8 bis 3,7 auf.

Insbesondere ist dieser Alkohol R²-OH erhalten nach einem Verfahren wie beschrieben in WO 00/02978 oder WO 00/50543.

Bei einem Heptadekanol-Isomerengemisch als zugrundeliegendem Alkohol R²-OH handelt sich um ein Gemisch aus 17 Kohlenstoffatome aufweisenden Alkoholen, besonders bevorzugt um ein solches, das durch Hydroformylierung aus eine C₁₆-Olefingemisch erhältlich ist, das seinerseits durch Oligomerisierung eines Olefingemisches erhältlich ist, das überwiegend vier Kohlenstoffatome aufweisende Kohlenwasserstoffe enthält.

Im statistischen Mittel weist dieses Olefingemisch 15 bis 17 Kohlenstoffatome auf, bevorzugt 15,1 bis 16,9, besonders bevorzugt 15,2 bis 16,8, ganz besonders bevorzugt 15,5 bis 16,5 und insbesondere 15,8 bis 16,2.

In einer ganz besonders bevorzugten Ausführungsform weist dieser Alkohol R¹-OH einen mittleren Verzweigungsgrad, gemessen als ISO-Index, von 2,8 bis 3,7 auf.

Insbesondere ist dieser Alkohol R¹-OH erhalten nach einem Verfahren wie beschrieben in WO 2009/124979 A1, dort besonders Seite 5, Zeile 4 bis Seite 16, Zeile 29, sowie der Beispiele von Seite 19, Zeile 19 bis Seite 21, Zeile 25, das hiermit durch Bezugnahme Bestandteil der vorliegenden Offenbarung sei.

Nach diesem bevorzugten Verfahren läßt sich als Produkt der Übergangsmetall-katalysierten Oligomerisierung von Olefinen mit 2 bis 6 Kohlenstoffatomen ein C₁₇-Alkoholgemisch mit besonders vorteilhaften anwendungstechnischen Eigenschaften herstellen. Dabei wird zunächst aus dem Produkt der Olefinoligomerisierung ein C₁₆-Olefingemisch destillativ isoliert und erst anschließend dieses C₁₆-Olefingemisch einer Hydroformylierung unterzogen. Somit gelingt es, ein höher verzweigtes C₁₇-Alkoholgemisch mit besonders vorteilhaften anwendungstechnischen Eigenschaften bereitzustellen.

Die Verbindungen (VI) sind bevorzugt erhältlich, indem man die korrespondierenden Alkohole R²-OH mit Alkylenoxiden bis zu dem gewünschten mittleren statistischen Alkoxylierungsgrad umsetzt, bevorzugt unter basischen Bedingungen. Dies ist dann besonders bevorzugt, wenn die Struktureinheit Xᵢ abgeleitet ist von Ethylenoxid oder Propylenoxid, bevorzugt von Ethylenoxid.

Die Verbindungen (VI) verringern erfindungsgemäß die Korrosion, besonders die Buntmetallkorrosion, können aber auch andere Wirkungen in den erfindungsgemäßen Kühlmittelzusammensetzungen erfüllen, beispielsweise zur Verringerung der Schaumbildung (Entschäumer, Defoamer, Anti-Schaummittel). Bevorzugt sind unter den Verbindungen (V) solche, die sowohl die Schaumbildung als auch die Korrosion, besonders die Buntmetallkorrosion verringern, besonders bevorzugt sind solche, die die Schaumbildung nicht nennenswert beeinflussen, aber die Korrosion, besonders die Buntmetallkorrosion verringern.

In den Verbindungen der Formel (VII) ist das Strukturelement R³-N< bevorzugt abgeleitet von Fettaminen, die bevorzugt durch Hydrierung und Aminierung von Fettsäuren und Estern erhältlich sind, besonders bevorzugt durch Hydrierung und Aminierung der oben genannten Fettsäuren oder Aminierung der oben genannten Fettalkohole. Die Ausführungen zu den Fettalkoholen gelten damit analog auch für die Fettamine.

Als Reste R³ sind Alkylreste den Alkenylresten gegenüber bevorzugt.

In einer bevorzugten Ausführungsform handelt es sich bei den Fettaminen um n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

Besonders bevorzugt sind n-Hexylamin, n-Octylamin, 2-Ethylhexylamin und n-Decylamin, ganz besonders bevorzugt sind n-Octylamin und 2-Ethylhexylamin und insbesondere n-Octylamin.

Insbesondere zu nennen ist zweifach, achtfach, zwanzigfach und vierzigfach ethoxyliertes n-Octylamin sowie achtfach, zwanzigfach und vierzigfach ethoxyliertes n-Hexylamin.

Bei den alkoxylierten Aminen der allgemeinen Formel (VII) bezieht sich der Alkoxylierungsgrad auf die Summe (p + q), also auf die durchschnittliche Gesamtzahl der Alkoxylierungseinheiten pro Molekül Amin.

Die Verbindungen (VII) sind bevorzugt erhältlich, indem man die korrespondierenden Amine R³-NH₂ mit Alkylenoxiden bis zu dem gewünschten mittleren statistischen Alkoxylierungsgrad umsetzt, bevorzugt unter basischen Bedingungen. Dies ist dann besonders bevorzugt, wenn die Struktureinheit Xᵢ abgeleitet ist von Ethylenoxid oder Propylenoxid, bevorzugt von Ethylenoxid.

Die erfindungsgemäßen Kühlmittelzusammensetzungen enthaltend mindestens eine der Verbindungen der Formeln (V) bis (VII), bevorzugt die Verbindungen der Formeln (V) und (VII), besonders bevorzugt die Verbindungen der Formel (VII) sind besonders geeignet zur Verringerung der Buntmetallkorrosion bei der Verwendung von Kühlmittelzusammensetzungen in Brennstoffzellen und werden demzufolge in einem erfindungsgemäßen Verfahren den Kühlmittelzusammensetzungen zugesetzt.

Aus den erfindungsgemäßen Gefrierschutzmittelkonzentraten lassen sich durch Verdünnen mit ionenfreiem Wasser gebrauchsfertige wäßrige Kühlmittelzusammensetzungen mit einer Leitfähigkeit von maximal 50 µS/cm, bevorzugt bis zu 40 µS/cm, besonders bevorzugt bis zu 30 und insbesondere bis zu 20 µS/cm, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew.-%, der genannten Azolderivaten, und
(d) gegebenenfalls mindestens einem ortho-Kieselsäureester, sowie
(e) 0,05 bis 5 Gew.-%, insbesondere 0,1 bis 1 Gew.-%, vor allem 0,2 bis 0,5 Gew.-% mindestens einer der Verbindungen (V), (VI) und/oder (VII)
bestehen, herstellen. Die Summe aller Komponenten beträgt hierbei 100 Gew.-%.

Gegenstand der vorliegenden Erfindung sind somit auch gebrauchsfertige wäßrige Kühlmittelzusammensetzungen für Kühlsysteme in Brennstoffzellen und/oder Batterien, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew .-%, der genannten Azolderivaten, und
(d) gegebenenfalls mindestens einem ortho-Kieselsäureester, sowie
(e) 0,05 bis 5 Gew.-%, insbesondere 0,1 bis 1 Gew.-%, vor allem 0,2 bis 0,5 Gew.-% mindestens einer der Verbindungen (V), (VI) und/oder (VII)
bestehen und die durch Verdünnen der genannten Gefrierschutzmittelkonzentraten mit ionenfreiem Wasser erhältlich sind. Die Summe aller Komponenten beträgt hierbei 100 Gew .-%.

Die erfindungsgemäßen gebrauchsfertigen wäßrigen Kühlmittelzusammensetzungen weisen eine anfängliche elektrische Leitfähigkeit von maximal 50 µS/cm, insbesondere 25 µS/cm, vorzugsweise 10 µS/cm, vor allem 5 µS/cm, auf. Die Leitfähigkeit wird im Dauerbetrieb der Brennstoffzelle über einen langen Zeitraum auf diesem niedrigen Niveau gehalten, insbesondere wenn in der Brennstoffzelle ein Kühlsystem mit integriertem Ionenaustauscher verwendet wird.

Der pH-Wert der erfindungsgemäßen gebrauchsfertigen wäßrigen Kühlmittelzusammensetzungen fällt über die Betriebsdauer deutlich langsamer ab als bei nicht mit den genannten Azolderivaten additivierten Kühlflüssigkeiten. Der pH-Wert liegt üblicherweise im Bereich von 4,5 bis 7 bei frischen erfindungsgemäßen Kühlmittelzusammensetzungen und fällt im Dauerbetrieb meist bis auf 3,5 ab. Das zum Verdünnen verwendete ionenfreie Wasser kann reines destilliertes oder bidestilliertes Wasser oder beispielsweise durch lonenaustausch entionisiertes Wasser sein.

Das bevorzugte Gew.-Mischungsverhältnis von Alkylenglykol bzw. deren Derivaten zu Wasser in den gebrauchsfertigen wäßrigen Kühlmittelzusammensetzungen beträgt 20:80 bis 80:20, insbesondere 25:75 bis 75:25, vorzugsweise 65:35 bis 35:65, vor allem 60:40 bis 40:60. Als Alkylenglykol-Komponente bzw. Derivate hiervon können insbesondere Monoethylenglykol, Diethylenglykol, Triethylenglykol, Tetraethylenglykol und deren Gemische, daneben aber auch Monopropylenglykol, Dipropylenglykol und deren Gemische, Polyglykole, Glykolether, beispielsweise Monoethylenglykol monomethylether, Diethylenglykol monomethylether, Triethylenglykol monomethylether, Tetraethylenglykol monomethylether, Monoethylenglykol monoethylether, Diethylenglykol monoethylether, Triethylenglykol monoethylether, Tetraethylenglykol monoethylether, Monoethylenglykol mono-n-butylether, Diethylenglykol mono-n-butylether, Triethylenglykol mono-n-butylether und Tetraethylenglykol mono-n-butylether, oder Glycerin jeweils allein oder als Mischungen hieraus verwendet werden. Besonders bevorzugt werden Monoethylenglykol allein oder Mischungen von Monoethylenglykol als Hauptkomponente, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

Die erfindungsgemäßen Gefrierschutzmittelkonzentrate selbst, aus denen die beschriebenen gebrauchsfertigen wäßrigen Kühlmittelzusammensetzungen resultieren, lassen sich durch Auflösen der genannten Azolderivate in Alkylenglykolen oder deren Derivaten, die wasserfrei oder mit einem geringen Gehalt an Wasser (etwa bis zu 10 Gew.-%, insbesondere bis zu 5 Gew.-%) eingesetzt werden können, herstellen.

Gegenstand der vorliegenden Erfindung ist auch die Verwendung mindestens einer der Verbindungen (V), (VI) und/oder (VII), zur Herstellung von Gefrierschutzmittelkonzentraten für Kühlsysteme in Brennstoffzellen und/oder Batterien, insbesondere in Kraftfahrzeugen, besonders bevorzugt in Personen- und Nutzfahrzeuge, auf Basis von Alkylenglykolen oder deren Derivaten.

Gegenstand der vorliegenden Erfindung ist weiterhin die Verwendung dieser Gefrierschutzmittelkonzentrate zur Herstellung von gebrauchsfertigen wäßrigen Kühlmittelzusammensetzungen mit einer Leitfähigkeit von maximal 50 µS/cm für Kühlsysteme in Brennstoffzellen und/oder Batterien, insbesondere in Kraftfahrzeugen, besonders bevorzugt in Personen- und Nutzfahrzeuge.

Die erfindungsgemäßen Kühlmittelzusammensetzungen können auch in einem Brennstoffzellenaggregat gemäß DE-A 101 04 771 (6) eingesetzt werden, in dem das Kühlmedium zur Verhinderung von Korrosion zusätzlich elektrochemisch entionisiert wird.

### Beispiele

Die Erfindung wird in den folgenden Beispielen erläutert, ohne sie jedoch darauf zu beschränken.

Die Prüflösungen wurden gemäß der Prüfvorschrift ASTM D1384 getestet mit der Abwandlung, daß die gemäß der ASTM D1384 übliche wässrige Verdünnung mit ASTM Wasser auf 33 Volumen-% entfällt. Stattdessen wurde das Testfluid (ca. 50 Vol.-%ige Lösung mit dest. Wasser) ohne weitere Verdünnung geprüft, da ein Batteriekühlmittel eine geringe elektrische Leitfähigkeit von ca. 20 µS/cm aufweisen muß, ASTM D1384 Wasser jedoch eine hohe elektrische Leitfähigkeit (ausgelöst durch die Korrosionsbschleuniger in Form diverser Kationen und Anionen) aufweist.

### Zusammensetzungen der Testfluide

| **Einsatzstoffe** | **Fluid 1** | **Fluid 2** | **Fluid 3** | **Fluid 4** | **Fluid 5** | **Fluid 6** |
|---|---|---|---|---|---|---|
| Monoethylenglykol | 50,0 | 50,0 | 50,0 | 50,0 | 50,0 | 50,0 |
| Wasser | 49,8 | 49,8 | 49,8 | 49,8 | 49,8 | 49,8 |
| Benzotriazol | 0,1 | 0,1 | 0,1 | 0,1 | 0,1 | 0,1 |
| Tetraethoxysilan | 0,1 | 0,1 | 0,1 | 0,1 | 0,1 | 0,1 |
| Hierzu wurden zugegeben | | | | | | |
| Rizinusölethoxylat (hydriert) mit 60 EO | 0,25 | | | 0,2 | | |
| Caprylamin ethoxylat mit 2 EO | 0,03 | 0,03 | 0,047 | 0,042 | 0,038 | 0,037 |
| Rizinusölethoxylat mit 40 EO | | 0,2 | | | 0,2 | |
| Rizinusölethoxylat mit 20 EO | | 0,05 | | | | 0,2 |

| | | | | | | |
|---|---|---|---|---|---|---|
| EO: Ethylenoxideinheiten | | | | | | |

Der Vergleich der Grundzusammensetzung aus Monoethylenglykol, Wasser, Benzotriazol und Tetraethoxysilan ohne weitere Zusätze führte zu sehr starker Korrosion an Eisenwerkstoffen innerhalb von wenigen Stunden verbunden mit einem Anstieg der elektrischen Leitfähigkeit auf Werte von größer als 1000 µS/cm.

Mit den Zusätzen ergaben sich dagegen folgende physikalische Daten gemäß ASTM D1384 (ohne wässrige Verdünnung mit ASTM Wasser auf 33 Volumen-%):

| **Fluid 1 Fluid 2 Fluid 3 Fluid 4 Fluid 5 Fluid 6** | | | | | | |
|---|---|---|---|---|---|---|
| pH-Wert, vor Test | 7,5 | 7,48 | 7,00 | 7,00 | 7,00 | 7,00 |
| pH-Wert, nach Test | 6,9 | 6,8 | 7,44 | 7,32 | 7,11 | 7,04 |
| Alkalireserve von ml HCl 0,1 mol/l vor Test | 0,49 | 0,18 | 0,39 | 0,36 | 0,38 | 0,35 |
| Alkalireserve von ml HCl 0,1 mol/l nach Test | 0,1 | 0,08 | 0,26 | 0,27 | 0,10 | 0,20 |
| Leitfähigkeit µS/cm vor Test | n.b. | 19,5 | 28,2 | 25,9 | 24,0 | 23,1 |
| Leitfähigkeit µS/cm nachTest | 23,5 | 24,5 | 30,8 | 29,2 | 27,0 | 27,1 |

Es wurden folgende Korrosionsraten nach ASTM D1384 bestimmt (Spezifische Massenänderung mit Beizblindwert mg/cm²)

| | **Fluid 1** | **Fluid 2** | **Fluid 3** | **Fluid 4** | **Fluid 5** | **Fluid 6** |
|---|---|---|---|---|---|---|
| Kupfer F-CU | -0,04 | 0,06 | -0,03 | -0,03 | -0,10 | -0,10 |
| Weichlot L - PbSn30 BASF | -0,34 | -0,19 | -0,10 | -0,20 | -0,11 | -0,11 |
| Messing Ms - 63 | -0,13 | 0,06 | -0,10 | -0,09 | -0,17 | -0,17 |
| Stahl H - II | -0,02 | 0,02 | 0,00 | 0,01 | -0,01 | -0,01 |
| Grauguss GG - 25 | -0,56 | 0,03 | -0,33 | 0,02 | 0,01 | 0,01 |
| Gussaluminium G - AlSi6Cu4 | 0,06 | 0,11 | -0,06 | 0,05 | 0,05 | 0,04 |

Zusammensetzungen weiterer Testfluide

| Einsatzstoffe | Fluid 7 | Fluid 8 | Fluid 9 | Fluid 10 | Fluid 11 | Fluid 12 | Fluid 13 (Vergleich) |
|---|---|---|---|---|---|---|---|
| Monoethylenglykol | 50,0 | 50,0 | 50,0 | 50,0 | 50,0 | 50,0 | 50,0 |
| Wasser | 49,8 | 49,8 | 49,8 | 49,8 | 49,8 | 49,8 | 49,8 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| Verbindung 1* | 0,25 | - | - | 0,2 | - | - | - |
| Verbindung 2** | 0,03 | 0,03 | 0,04 | 0,042 | 0,038 | 0,037 | - |
| Verbindung 3*** | - | 0,2 | - | - | 0,2 | - | - |
| Verbindung 4**** | - | 0,05 | - | - | - | 0,2 | - |

| | | | | | | | |
|---|---|---|---|---|---|---|---|
| * Verbindung 1: handelsübliche, im statistischen Mittel 60fach ethoxylierte Octadecansäure ** Verbindung 2: handelsübliches, zweifach ethoxyliertes n-Octylamin *** Verbindung 3: handelsübliche, im statistischen Mittel 40fach ethoxylierte Octadecansäure **** Verbindung 4: handelsübliche, im statistischen Mittel 20fach ethoxylierte C₁₈-Carbonsäure, Gemisch aus gesättigten und ungesättigten Carbonsäuren | | | | | | | |

Mit den Zusätzen ergaben sich folgende physikalische Daten gemäß ASTM D1384 (ohne wässrige Verdünnung mit ASTM Wasser auf 33 Volumen-%):

| | Fluid 7 | Fluid 8 | Fluid 9 | Fluid 10 | Fluid 11 | Fluid 12 | Fluid 13 (Vergleich) |
|---|---|---|---|---|---|---|---|
| pH-Wert, vor Test | 6,57 | 6,61 | 6,86 | 6,87 | 6,82 | 6,86 | 4,85 |
| pH-Wert, nach Test | 6,11 | 6,05 | 6,45 | 6,35 | 6,26 | 6,19 | 3,76 |
| Alkalireserve von ml HCl 0,1 mol/l vor Test | 0,25 | 0,25 | 0,23 | 0,29 | 0,22 | 0,26 | 0 |
| Alkalireserve von ml HCl 0,1 mol/l nach Test | 0 | 0,13 | 0,23 | 0,23 | 0,15 | 0,10 | 0 |
| Leitfähigkeit µS/cm vor Test | 21,5 | 22,0 | 27,8 | 26,2 | 22,9 | 22,9 | 0,8 |
| Leitfähigkeit µS/cm nachTest | 23,9 | 22,2 | 31,5 | 28,8 | 26,8 | 25,6 | 23,6 |

Es wurden folgende Korrosionsraten nach ASTM D1384 bestimmt (Spezifische Massenänderung ohne Beizblindwert mg/cm²)

| | Fluid 7 | Fluid 8 | Fluid 9 | Fluid 10 | Fluid 11 | Fluid 12 | Fluid 13 (Vergleich) |
|---|---|---|---|---|---|---|---|
| Kupfer F-CU | -0,05 | -0,05 | -0,05 | -0,07 | -0,06 | -0,07 | -0,06 |
| Weichlot L - PbSn30 BASF | -0,18 | -0,12 | -0,12 | -0,16 | -0,14 | -0,06 | -0,49 |
| Messing Ms - 63 | -0,06 | -0,09 | -0,06 | -0,10 | -0,09 | -0,09 | -0,15 |
| Stahl H - II | +0,01 | ±0,00 | -0,01 | -0,01 | -0,02 | ±0,00 | -4,16 |
| Grauguss GG - 25 | -0,04 | +0,03 | -0,08 | +0,02 | +0,04 | +0,05 | -6,18 |
| Gussaluminium G - AlSi6Cu4 | +0,09 | +0,06 | +0,04 | +0,11 | +0,12 | +0,05 | +0,20 |

Zusammensetzungen weiterer Testfluide mit Tolutriazol als Korrosionsinhibitor

| Einsatzstoffe | Fluid 14 | Fluid 15 | Fluid 16 | Fluid 17 | Fluid 18 | Fluid 19 | Fluid 20 (Vergleich) |
|---|---|---|---|---|---|---|---|
| Monoethylenglykol | 50,0 | 50,0 | 50,0 | 50,0 | 50,0 | 50,0 | 50,0 |
| Wasser | 49,8 | 49,8 | 49,8 | 49,8 | 49,8 | 49,8 | 49,8 |
| Tolutriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| Verbindung 1 | 0,25 | - | - | 0,2 | - | - | - |
| Verbindung 2 | 0,03 | 0,03 | 0,04 | 0,042 | 0,038 | 0,037 | - |
| Verbindung 3 | - | 0,2 | - | - | 0,2 | - | - |
| Verbindung 4 | - | 0,05 | - | - | - | 0,2 | - |

Mit den Zusätzen ergaben sich folgende physikalische Daten gemäß ASTM D1384 (ohne wässrige Verdünnung mit ASTM Wasser auf 33 Volumen-%):

| | Fluid 14 | Fluid 15 | Fluid 16 | Fluid 17 | Fluid 18 | Fluid 19 | Fluid 20 (Vergleich) |
|---|---|---|---|---|---|---|---|
| pH-Wert, vor Test | 6,93 | 6,99 | 7,18 | 7,19 | 7,08 | 7,07 | 4,45 |
| pH-Wert, nach Test | 6,04 | 6,62 | 6,97 | 6,73 | 6,76 | 6,65 | 3,76 |
| Alkalireserve von ml HCl 0,1 mol/l vor Test | 0,24 | 0,23 | 0,27 | 0,26 | 0,20 | 0,25 | 0 |
| Alkalireserve von ml HCl 0,1 mol/l nach Test | 0,05 | 0,09 | 0,21 | 0,15 | 0,09 | 0,08 | 0 |
| Leitfähigkeit µS/cm vor Test | 17,8 | 19,0 | 23,5 | 23,0 | 20,8 | 20,2 | 0,8 |
| Leitfähigkeit µS/cm nachTest | 23,2 | 20,7 | 28,5 | 30,9 | 22,9 | 23,9 | 21,1 |

Es wurden folgende Korrosionsraten nach ASTM D1384 bestimmt (Spezifische Massenänderung ohne Beizblindwert mg/cm²)

| | Fluid 14 | Fluid 15 | Fluid 16 | Fluid 17 | Fluid 18 | Fluid 19 | Fluid 20 (Vergleich) |
|---|---|---|---|---|---|---|---|
| Kupfer F-CU | -0,07 | -0,05 | -0,07 | -0,05 | -0,07 | -0,07 | -0,04 |
| Weichlot L - PbSn30 BASF | -0,29 | -0,06 | -0,09 | -0,28 | -0,11 | -0,05 | -0,22 |
| Messing Ms - 63 | -0,08 | -0,09 | -0,07 | -0,09 | -0,10 | -0,12 | -0,05 |
| Stahl H - II | -0,03 | -0,01 | -0,02 | ±0,00 | ±0,00 | +0,02 | -4,02 |
| Grauguss GG - 25 | -0,15 | +0,03 | -0,24 | -0,93 | +0,02 | +0,04 | -7,12 |
| Gussaluminium G - AlSi6Cu4 | +0,05 | +0,09 | +0,08 | +0,08 | +0,04 | +0,05 | +0,13 |

Weitere Testfluide sind in den Tabellen 1 bis 23 aufgeführt.

**Tabelle 1**

| Einsatzstoffe | Fluid 31 | Fluid 32 | Fluid 33 | Fluid 34 | Fluid 35 | Fluid 36 | Fluid 37 (Vergleich) |
|---|---|---|---|---|---|---|---|
| 1,2-Propylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| Verbindung 2 | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 2**

| Einsatzstoffe | Fluid 41 | Fluid 42 | Fluid 43 | Fluid 44 | Fluid 45 | Fluid 46 | Fluid 47 |
|---|---|---|---|---|---|---|---|
| 1,2-Propylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,3 | | | | | | |
| 20fach ethoxyliertes Octylamin | | 0,3 | | | | | |
| 40fach ethoxyliertes Octylamin | | | 0,3 | | | | |
| 60fach ethoxyliertes Octylamin | | | | 0,3 | | | |
| 8fach ethoxyliertes Hexylamin | | | | | 0,3 | | |
| 20fach ethoxyliertes Hexylamin | | | | | | 0,3 | |
| 40fach ethoxyliertes Hexylamin | | | | | | | 0,3 |
| Verbindung 4 | 0,25 | 0,25 | 0,25 | 0,25 | 0,25 | 0,25 | 0,25 |

**Tabelle 3**

| Einsatzstoffe | Fluid 51 | Fluid 52 | Fluid 53 | Fluid 54 | Fluid 55 | Fluid 56 | Fluid 57 |
|---|---|---|---|---|---|---|---|
| 1,2-Propylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,3 | | | | | | |
| 20fach ethoxyliertes Octylamin | | 0,3 | | | | | |
| 40fach ethoxyliertes Octylamin | | | 0,3 | | | | |
| 60fach ethoxyliertes Octylamin | | | | 0,3 | | | |
| 8fach ethoxyliertes Hexylamin | | | | | 0,3 | | |
| 20fach ethoxyliertes Hexylamin | | | | | | 0,3 | |
| 40fach ethoxyliertes Hexylamin | | | | | | | 0,3 |
| Verbindung 3 | 0,25 | 0,25 | 0,25 | 0,25 | 0,25 | 0,25 | 0,25 |

**Tabelle 4**

| Einsatzstoffe | Fluid 61 | Fluid 62 | Fluid 63 | Fluid 64 | Fluid 65 | Fluid 66 | Fluid 67 |
|---|---|---|---|---|---|---|---|
| 1,2-Propylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,3 | | | | | | |
| 20fach ethoxyliertes Octylamin | | 0,3 | | | | | |
| 40fach ethoxyliertes Octylamin | | | 0,3 | | | | |
| 60fach ethoxyliertes Octylamin | | | | 0,3 | | | |
| 8fach ethoxyliertes Hexylamin | | | | | 0,3 | | |
| 20fach ethoxyliertes Hexylamin | | | | | | 0,3 | |
| 40fach ethoxyliertes Hexylamin | | | | | | | 0,3 |
| Verbindung 1 | 0,25 | 0,25 | 0,25 | 0,25 | 0,25 | 0,25 | 0,25 |

**Tabelle 5**

| Einsatzstoffe | Fluid 71 | Fluid 72 | Fluid 73 | Fluid 74 | Fluid 75 | Fluid 76 |
|---|---|---|---|---|---|---|
| 1,2-Propylenglykol | 50 | 50 | 50 | 50 | 50 | 50 |
| Wasser | ad 100 | ad 100 | ad 100 | ad 100 | ad 100 | ad 100 |
| Benzotriazol | 0,1 | 0,1 | 0,1 | 0,1 | 0,1 | 0,1 |
| Diethoxydimethylsilan | 0,1 | 0,1 | 0,1 | 0,1 | 0,1 | 0,1 |
| Hierzu wurden zugegeben | | | | | | |
| Verbindung 2 | 0,03 | 0,03 | 0,04 | 0,042 | 0,038 | 0,037 |
| Verbindung 4 | - | 0,05 | - | - | - | 0,2 |
| Verbindung 3 | - | 0,2 | - | - | 0,2 | - |
| Verbindung 1 | 0,25 | - | - | 0,2 | - | - |

**Tabelle 6**

| Einsatzstoffe | Fluid 81 | Fluid 82 | Fluid 83 | Fluid 84 | Fluid 85 | Fluid 86 |
|---|---|---|---|---|---|---|
| 1,2-Propylenglykol | 50 | 50 | 50 | 50 | 50 | 50 |
| Wasser | ad 100 | ad 100 | ad 100 | ad 100 | ad 100 | ad 100 |
| Benzotriazol | 0,1 | 0,1 | 0,1 | 0,1 | 0,1 | 0,1 |
| Ethoxytrimethylsilan | 0,1 | 0,1 | 0,1 | 0,1 | 0,1 | 0,1 |
| Hierzu wurden zugegeben | | | | | | |
| Verbindung 2 | 0,03 | 0,03 | 0,04 | 0,042 | 0,038 | 0,037 |
| Verbindung 4 | - | 0,05 | - | - | - | 0,2 |
| Verbindung 3 | - | 0,2 | - | - | 0,2 | - |
| Verbindung 1 | 0,25 | - | - | 0,2 | - | - |

**Tabelle 7**

| Einsatzstoffe | Fluid 91 | Fluid 92 | Fluid 93 | Fluid 94 | Fluid 95 | Fluid 96 |
|---|---|---|---|---|---|---|
| 1,2-Propylenglykol | 50 | 50 | 50 | 50 | 50 | 50 |
| Wasser | ad 100 | ad 100 | ad 100 | ad 100 | ad 100 | ad 100 |
| Benzotriazol | 0,1 | 0,1 | 0,1 | 0,1 | 0,1 | 0,1 |
| Tetramethoxysilan | 0,1 | 0,1 | 0,1 | 0,1 | 0,1 | 0,1 |
| Hierzu wurden zugegeben | | | | | | |
| Verbindung 2 | 0,03 | 0,03 | 0,04 | 0,042 | 0,038 | 0,037 |
| Verbindung 4 | - | 0,05 | - | - | - | 0,2 |
| Verbindung 3 | - | 0,2 | - | - | 0,2 | - |
| Verbindung 1 | 0,25 | - | - | 0,2 | - | - |

**Tabelle 8**

| Einsatzstoffe | Fluid 101 | Fluid 102 | Fluid 103 | Fluid 104 | Fluid 105 | Fluid 106 |
|---|---|---|---|---|---|---|
| 1,2-Propylenglykol | 50 | 50 | 50 | 50 | 50 | 50 |
| Wasser | ad 100 | ad 100 | ad 100 | ad 100 | ad 100 | ad 100 |
| Benzotriazol | 0,1 | 0,1 | 0,1 | 0,1 | 0,1 | 0,1 |
| Dimethoxydimethylsilan | 0,1 | 0,1 | 0,1 | 0,1 | 0,1 | 0,1 |
| Hierzu wurden zugegeben | | | | | | |
| Verbindung 2 | 0,03 | 0,03 | 0,04 | 0,042 | 0,038 | 0,037 |
| Verbindung 4 | - | 0,05 | - | - | - | 0,2 |
| Verbindung 3 | - | 0,2 | - | - | 0,2 | - |
| Verbindung 1 | 0,25 | - | - | 0,2 | - | - |

**Tabelle 9**

| Einsatzstoffe | Fluid 111 | Fluid 112 | Fluid 113 | Fluid 114 | Fluid 115 | Fluid 116 | Fluid 117 | Fluid 118 (Vergleich) |
|---|---|---|---|---|---|---|---|---|
| Diethylenglykol | 50 | 50 | 50 | 50 | 50 | 50 | 50 | 50 |
| Wasser | ad 100 | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 | 0,1 |
| Hierzu wurden zugegeben | | | | | | | | |
| 8fach ethoxyliertes Octylamin | 0,3 | | | | | | | |
| 20fach ethoxyliertes Octylamin | | 0,3 | | | | | | |
| 40fach ethoxyliertes Octylamin | | | 0,3 | | | | | |
| 60fach ethoxyliertes Octylamin | | | | 0,3 | | | | |
| 8fach ethoxyliertes Hexylamin | | | | | 0,3 | | | |
| 20fach ethoxyliertes Hexylamin | | | | | | 0,3 | | |
| 40fach ethoxyliertes Hexylamin | | | | | | | 0,3 | |
| Verbindung 3 | 0,25 | 0,25 | 0,25 | 0,25 | 0,25 | 0,25 | 0,25 | |

**Tabelle 10**

| Einsatzstoffe | Fluid 121 | Fluid 122 | Fluid 123 | Fluid 124 | Fluid 125 | Fluid 126 | Fluid 127 | Fluid 128 (Vergleich) |
|---|---|---|---|---|---|---|---|---|
| Triethylenglykol | 50 | 50 | 50 | 50 | 50 | 50 | 50 | 50 |
| Wasser | ad 100 | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 | 0,1 |
| Hierzu wurden zugegeben | | | | | | | | |
| 8fach ethoxyliertes Octylamin | 0,3 | | | | | | | |
| 20fach ethoxyliertes Octylamin | | 0,3 | | | | | | |
| 40fach ethoxyliertes Octylamin | | | 0,3 | | | | | |
| 60fach ethoxyliertes Octylamin | | | | 0,3 | | | | |
| 8fach ethoxyliertes Hexylamin | | | | | 0,3 | | | |
| 20fach ethoxyliertes Hexylamin | | | | | | 0,3 | | |
| 40fach ethoxyliertes Hexylamin | | | | | | | 0,3 | |
| Verbindung 3 | 0,25 | 0,25 | 0,25 | 0,25 | 0,25 | 0,25 | 0,25 | |

**Tabelle 11**

| Einsatzstoffe | Fluid 131 | Fluid 132 | Fluid 133 | Fluid 134 | Fluid 135 | Fluid 136 |
|---|---|---|---|---|---|---|
| 1,2-Propylenglykol | 50 | 50 | 50 | 50 | 50 | 50 |
| Wasser | ad 100 | ad 100 | ad 100 | ad 100 | ad 100 | ad 100 |
| Tolutriazol | 0,1 | 0,1 | 0,1 | 0,1 | 0,1 | 0,1 |
| Tetraethoxysilan | 0,1 | 0,1 | 0,1 | 0,1 | 0,1 | 0,1 |
| Hierzu wurden zugegeben | | | | | | |
| Verbindung 2 | 0,03 | 0,03 | 0,04 | 0,042 | 0,038 | 0,037 |
| Verbindung 4 | - | 0,05 | - | - | - | 0,2 |
| Verbindung 3 | - | 0,2 | - | - | 0,2 | - |
| Verbindung 1 | 0,25 | - | - | 0,2 | - | - |

**Tabelle 12**

| Einsatzstoffe | Fluid 141 | Fluid 142 | Fluid 143 | Fluid 144 | Fluid 145 | Fluid 146 | Fluid 147 |
|---|---|---|---|---|---|---|---|
| 1,2-Propylenglykol | 50 | 50 | 50 | 50 | 50 | 50 | 50 |
| Wasser | ad 100 | ad 100 | ad 100 | ad 100 | ad 100 | ad 100 | ad 100 |
| Tolutriazol | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,3 | | | | | | |
| 20fach ethoxyliertes Octylamin | | 0,3 | | | | | |
| 40fach ethoxyliertes Octylamin | | | 0,3 | | | | |
| 60fach ethoxyliertes Octylamin | | | | 0,3 | | | |
| 8fach ethoxyliertes Hexylamin | | | | | 0,3 | | |
| 20fach ethoxyliertes Hexylamin | | | | | | 0,3 | |
| 40fach ethoxyliertes Hexylamin | | | | | | | 0,3 |
| Verbindung 3 | 0,25 | 0,25 | 0,25 | 0,25 | 0,25 | 0,25 | 0,25 |

**Tabelle 13**

| Einsatzstoffe | Fluid 151 | Fluid 152 | Fluid 153 | Fluid 154 | Fluid 155 | Fluid 156 | Fluid 157 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 14**

| Einsatzstoffe | Fluid 161 | Fluid 162 | Fluid 163 | Fluid 164 | Fluid 165 | Fluid 166 | Fluid 167 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 20fach ethoxyliertes Octylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 15**

| Einsatzstoffe | Fluid 171 | Fluid 172 | Fluid 173 | Fluid 174 | Fluid 175 | Fluid 176 | Fluid 177 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 40fach ethoxyliertes Octylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 16**

| Einsatzstoffe | Fluid 181 | Fluid 182 | Fluid 183 | Fluid 184 | Fluid 185 | Fluid 186 | Fluid 187 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 60fach ethoxyliertes Octylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 17**

| Einsatzstoffe | Fluid 191 | Fluid 192 | Fluid 193 | Fluid 194 | Fluid 195 | Fluid 196 | Fluid 197 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 8fach ethoxyliertes Hexylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 18**

| Einsatzstoffe | Fluid 201 | Fluid 202 | Fluid 203 | Fluid 204 | Fluid 205 | Fluid 206 | Fluid 207 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 20fach ethoxyliertes Hexylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 19**

| Einsatzstoffe | Fluid 211 | Fluid 212 | Fluid 213 | Fluid 214 | Fluid 215 | Fluid 216 | Fluid 217 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 40fach ethoxyliertes Hexylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 20**

| Einsatzstoffe | Fluid 221 | Fluid 222 | Fluid 223 | Fluid 224 | Fluid 225 | Fluid 226 | Fluid 227 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 60fach ethoxyliertes Hexylamin | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 21**

| Einsatzstoffe | Fluid 231 | Fluid 232 | Fluid 233 | Fluid 234 | Fluid 235 | Fluid 236 | Fluid 237 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 20fach ethoxylierter n-Octanol | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 22**

| Einsatzstoffe | Fluid 241 | Fluid 242 | Fluid 243 | Fluid 244 | Fluid 245 | Fluid 246 | Fluid 247 (Vergleich) |
|---|---|---|---|---|---|---|---|
| Monoethylenglykol | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Tetraethoxysilan | 0,1 | 0,1 | 0,1 | 0,1 | 0,1 | 0,1 | 0,1 |
| Hierzu wurden zugegeben | | | | | | | |
| 40fach ethoxylierter n-Octanol | 0,03 | 0,03 | 0,04 | 0,042 | 0,038 | 0,037 | - |
| Verbindung 4 | - | 0,05 | - | - | - | 0,2 | - |
| Verbindung 3 | - | 0,2 | - | - | 0,2 | - | - |
| Verbindung 1 | 0,25 | - | - | 0,2 | - | - | - |

**Tabelle 23**

| Einsatzstoffe | Fluid 251 | Fluid 252 | Fluid 253 | Fluid 254 | Fluid 255 | Fluid 256 | Fluid 257 |
|---|---|---|---|---|---|---|---|
| Glycerin | 50 | 50 | 50 | 50 | 50 | 50 | 50 |
| Wasser | ad 100 | ad 100 | ad 100 | ad 100 | ad 100 | ad 100 | ad 100 |
| Benzotriazol | 0,1 | 0,1 | 0,1 | 0,1 | 0,1 | 0,1 | 0,1 |
| Triethoxymethylsilan | 0,1 | 0,1 | 0,1 | 0,1 | 0,1 | 0,1 | 0,1 |
| Hierzu wurden zugegeben | | | | | | | |
| 8fach ethoxyliertes Octylamin | 0,3 | | | | | | |
| 20fach ethoxyliertes Octylamin | | 0,3 | | | | | |
| 40fach ethoxyliertes Octylamin | | | 0,3 | | | | |
| 60fach ethoxyliertes Octylamin | | | | 0,3 | | | |
| 8fach ethoxyliertes Hexylamin | | | | | 0,3 | | |
| 20fach ethoxyliertes Hexylamin | | | | | | 0,3 | |
| 40fach ethoxyliertes Hexylamin | | | | | | | 0,3 |
| Verbindung 4 | 0,25 | 0,25 | 0,25 | 0,25 | 0,25 | 0,25 | 0,25 |

## Patentansprüche

1. Kühlmittelzusammensetzungen mit einer Leitfähigkeit von maximal 50 µS/cm für Kühlsysteme in Brennstoffzellen und/oder Batterien, enthaltend
(a) 10 bis 90 Gew.-% mindestens eines Alkylenglykols oder deren Derivate,
(b) 90 bis 10 Gew.-% ionenfreies, bevorzugt destilliertes, bidestilliertes oder entionisiertes Wasser,
(c) 0,005 bis 5 Gew.-%, insbesondere 0,0075 bis 2,5 Gew.-%, vor allem 0,01 bis 1 Gew.-% einer oder mehrerer fünfgliedriger heterocyclischer Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, ausgewählt aus der Gruppe bestehend aus anellierten Imidazolen und anellierten 1,2,3-Triazolen der allgemeinen Formel 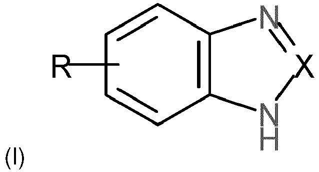 oder 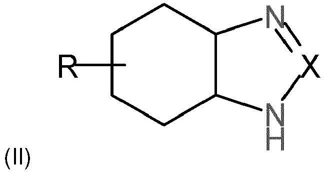 in denen die Variable
R Wasserstoff oder einen C₁- bis C₁₀-Alkylrest, insbesondere Methyl oder Ethyl, bedeutet und
die Variable X ein Stickstoffatom oder die Gruppierung C-H bezeichnet,
sowie
Benzthiazole der allgemeinen Formel (III) 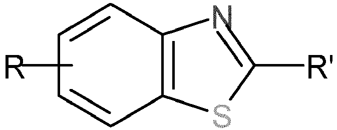 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe(-SH) bezeichnet,
(d) gegebenenfalls mindestens einen ortho-Kieselsäureester
**dadurch gekennzeichnet, daß** sie zusätzlich
(e) 0,05 bis 5 Gew.-%, insbesondere 0,1 bis 1 Gew.-%, vor allem 0,2 bis 0,5 Gew.-% mindestens eine der Verbindungen
der allgemeinen Formel (V) 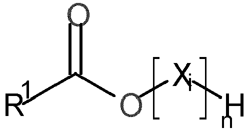 , der allgemeinen Formel (VI) 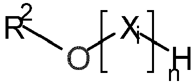 sowie der allgemeinen Formel (VII) 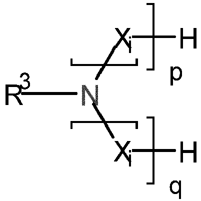 worin
R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
n eine positive ganze Zahl von 10 bis 60, bevorzugt 12 bis 50, besonders bevorzugt 15 bis 40, ganz besonders bevorzugt 18 bis 30 und insbesondere 20 bis 25,
p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten,
enthalten,
wobei die Summe aller Komponenten hierbei 100 Gew.-% beträgt.

2. Kühlmittelzusammensetzungen gemäß Anspruch 1, **dadurch gekennzeichnet, daß** mindestens eine Verbindung der Formel (V) anwesend ist.

3. Kühlmittelzusammensetzungen gemäß Anspruch 1, **dadurch gekennzeichnet, daß** das Strukturelement R¹-COO- in der Formel (V) abgeleitet ist von Säuren, ausgewählt ist aus der Gruppe bestehend aus 2-Ethylhexansäure, Octansäure (Caprylsäure), Pelargonsäure (Nonansäure), 2-Propylheptansäure, Decansäure (Caprinsäure), Undecansäure, Dodecansäure (Laurinsäure), Tridecansäure, Tetradecansäure (Myristinsäure), Pentadecansäure, Palmitinsäure (Hexadecansäure), Palmitoleinsäure [(9*Z*)-Hexadec-9-ensäure], Margarinsäure (Heptadecansäure), Stearinsäure (Octadecansäure), Ölsäure [(9*Z*)-Octadec-9-ensäure], Elaidinsäure [(9*E*)-Octadec-9-ensäure], Linolsäure [(9*Z*,12*Z*)-Octadeca-9,12-diensäure], Linolensäure [(9*Z*,12*Z*,15*Z*)-Octadeca-9,12,15-triensäure], Elaeostearinsäure [(9*Z*,11*E*,13*E*)-Octadeca-9,11,13-triensäure], Ricinolsäure ((R)-12-Hydroxy-(Z)-octadec-9-ensäure), Isoricinolsäure [(*S*)-9-Hydroxy-(*Z*)-octadec-12-ensäure], Nonadecansäure, Arachinsäure (Eicosansäure), Behensäure (Docosansäure) und Erucasäure [(13*Z*)-Docos-13-ensäure].

4. Kühlmittelzusammensetzungen gemäß Anspruch 3, **dadurch gekennzeichnet, daß** das Strukturelement R¹-COO- aus Fettsäuregemischen stammt, aus der Aufarbeitung von Leinöl, Kokosfett, Palmkernöl, Palmöl, Sojaöl, Erdnußöl, Kakaobutter, Sheabutter, Baumwollsaatöl, Maiskeimöl, Sonnenblumenöl, Rapsöl oder Ricinusöl stammen.

5. Kühlmittelzusammensetzungen gemäß Anspruch 1, **dadurch gekennzeichnet, daß** das Strukturelement R²-O- in Formel (VI) abgeleitet ist von Alkoholen, ausgewählt ist aus der Gruppe bestehend aus Octylalkohol (Caprylalkohol), Nonylalkohol (Pelargonylalkohol), Decylalkohol (Caprinalkohol), Undecylalkohol, Dodecylalkohol (Laurylalkohol), Tridecylalkohol, Tetradecylalkohol (Myristylalkohol), Pentadecylalkohol, Hexadecylalkohol (Cetylalkohol, Palmitylalkohol), Heptadecylalkohol, Octadecylalkohol (Stearylalkohol), Oleylalkohol, Elaidylalkohol, Linoleylalkohol, Linolenoylalkohol, Nonadecylalkohol, Eicosylalkohol (Arachylalkohol) oder deren Gemische.

6. Kühlmittelzusammensetzungen gemäß Anspruch 1, **dadurch gekennzeichnet, daß** das Strukturelement R²-O- in Formel (VI) abgeleitet ist von Alkoholen, ausgewählt ist aus der Gruppe bestehend aus 2-Ethylhexanol, 2-Propylheptanol, Tridekanol-Isomerengemische und Heptadekanol-Isomerengemische.

7. Kühlmittelzusammensetzungen gemäß Anspruch 1, **dadurch gekennzeichnet, daß** das Strukturelement R²-O- in Formel (VI) abgeleitet ist von alkoxylierten Ricinusölen, bevorzugt hydrierte alkoxylierten Ricinusölen.

8. Kühlmittelzusammensetzungen gemäß Anspruch 1, **dadurch gekennzeichnet, daß** das Strukturelement R³-N< in Formel (VII) abgeleitet ist von Aminen, ausgewählt ist aus der Gruppe bestehend aus n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

9. Kühlmittelzusammensetzungen gemäß einem der vorstehenden Ansprüche, **dadurch gekennzeichnet, daß** Xᵢ für -CH₂-CH₂-O- steht.

10. Kühlmittelzusammensetzungen gemäß einem der vorstehenden Ansprüche, **dadurch gekennzeichnet, daß** n in den Formeln (V) und (VI) für 18 bis 60 steht und p und q in Formel (VII) für 1 steht.

11. Kühlmittelzusammensetzungen gemäß einem der vorstehenden Ansprüche, enthaltend als Azolderivate Benzimidazol, Benzotriazol, Tolutriazol, 2-Mercaptobenzthiazol und/oder hydriertes Tolutriazol.

12. Kühlmittelzusammensetzungen gemäß einem der vorstehenden Ansprüche, enthaltend zusätzlich ortho-Kieselsäureester in einer Menge, so daß der Siliziumgehalt in der gebrauchsfertigen wäßrigen Kühlmittelzusammensetzung von 2 bis 2000 Gew.-ppm beträgt.

13. Kühlmittelzusammensetzungen gemäß einem der vorstehenden Ansprüche mit einer Leitfähigkeit von maximal 25 µS/cm.

14. Verfahren zur Herstellung von Kühlmittelzusammensetzungen mit einer Leitfähigkeit von maximal 50 µS/cm gemäß Anspruch 1, **dadurch gekennzeichnet, daß** man mindestens ein Gefrierschutzmittelkonzentrat, das wasserfrei ist oder bis zu 10 Gew% Wasser enthält, enthaltend mindestens ein Alkylenglykol oder deren Derivate, enthaltend ferner eine oder mehrere fünfgliedrige heterocyclische Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, wie definiert in Anspruch 1 oder 11, enthaltend zusätzlich mindestens eine der Verbindungen
der allgemeinen Formel (V) 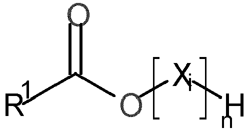 , der allgemeinen Formel (VI) 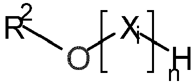 sowie der allgemeinen Formel (VII) 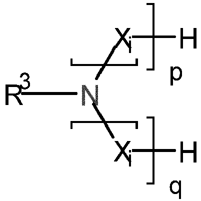 worin
R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
n eine positive ganze Zahl von 10 bis 60, bevorzugt 12 bis 50, besonders bevorzugt 15 bis 40, ganz besonders bevorzugt 18 bis 30 und insbesondere 20 bis 25,
p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten,
mit ionenfreiem, bevorzugt destilliertem, bidestillierten oder entionisierten Wasser versetzt.

15. Verfahren zur Verringerung der Buntmetallkorrosion bei Verwendung von Kühlmittelzusammensetzungen mit einer Leitfähigkeit von maximal 50 µS/cm in Brennstoffzellen und/oder Batterien, enthaltend
(a) 10 bis 90 Gew.-% mindestens eines Alkylenglykols oder deren Derivate,
(b) 90 bis 10 Gew.-% ionenfreies, bevorzugt destilliertes, bidestilliertes oder entionisiertes Wasser,
(c) 0,005 bis 5 Gew.-%, insbesondere 0,0075 bis 2,5 Gew.-%, vor allem 0,01 bis 1 Gew.-% einer oder mehrerer fünfgliedriger heterocyclischen Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, wie definiert in Anspruch 1 oder 11,
(d) gegebenenfalls mindestens einen ortho-Kieselsäureester,
**dadurch gekennzeichnet, daß** die Kühlmittelzusammensetzung zusätzlich
(e) 0,05 bis 5 Gew.-%, insbesondere 0,1 bis 1 Gew.-%, vor allem 0,2 bis 0,5 Gew.-% mindestens eine der Verbindungen
der allgemeinen Formel (V) 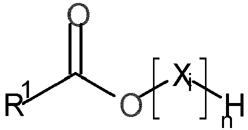 , der allgemeinen Formel (VI) 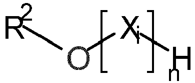 sowie der allgemeinen Formel (VII) 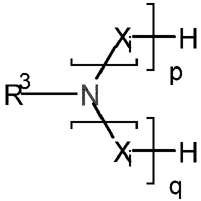 worin
R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
n eine positive ganze Zahl von 10 bis 60, bevorzugt 12 bis 50, besonders bevorzugt 15 bis 40, ganz besonders bevorzugt 18 bis 30 und insbesondere 20 bis 25,
p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten,
enthält,
wobei die Summe aller Komponenten hierbei 100 Gew.-% beträgt.

16. Gefrierschutzmittelkonzentrat , das wasserfrei ist oder bis zu 10 Gew% Wasser enthält, zum Einsatz in ein Verfahren gemäß Anspruch 14, enthaltend mindestens ein Alkylenglykol oder deren Derivate, enthaltend ferner eine oder mehrere fünfgliedrige heterocyclische Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, wie definiert in Anspruch 1 oder 11, enthaltend zusätzlich mindestens eine der Verbindungen
der allgemeinen Formel (V) 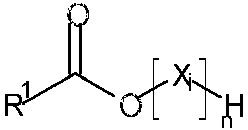 , der allgemeinen Formel (VI) 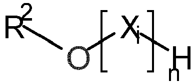 sowie der allgemeinen Formel (VII) 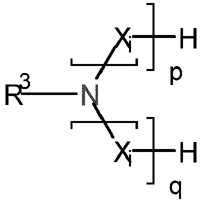 worin
R¹ einen organischen Rest mit 7 bis 21 Kohlenstoffatomen, insbesondere einen Alkyl- oder Alkenylrest mit 7 bis 21 Kohlenstoffatomen, bevorzugt 9 bis 19, besonders bevorzugt 11 bis 19, ganz besonders bevorzugt 13 bis 19, insbesondere 15 bis 19 und speziell 17 Kohlenstoffatomen,
R² einen organischen Rest mit 8 bis 22 Kohlenstoffatomen, insbesondere einen Alkyl- oder Alkenylrest mit 8 bis 22 Kohlenstoffatomen, bevorzugt 10 bis 20, besonders bevorzugt 12 bis 20, ganz besonders bevorzugt 14 bis 20, insbesondere 16 bis 20 und speziell 18 Kohlenstoffatomen,
R³ einen organischen Rest mit 6 bis 10 Kohlenstoffatomen, insbesondere einen Alkyl- oder Alkenylrest mit 6 bis 10 Kohlenstoffatomen, bevorzugt 7 bis 9 und besonders bevorzugt 8 Kohlenstoffatomen,
n eine positive ganze Zahl von 10 bis 60, bevorzugt 12 bis 50, besonders bevorzugt 15 bis 40, ganz besonders bevorzugt 18 bis 30 und insbesondere 20 bis 25,
p und q unabhängig voneinander eine positive ganze Zahl von 1 bis 40, bevorzugt 1 bis 30, besonders bevorzugt 2 bis 25, ganz besonders bevorzugt 3 bis 20 und insbesondere 5 bis 15 und
jedes Xᵢ für i = 1 bis n, 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten.

17. Verwendung mindestens einer der Verbindungen (V), (VI) und/oder (VII) wie definiert in einem der vorstehenden Ansprüche, zur Herstellung von Gefrierschutzmittelkonzentraten für Kühlsysteme in Brennstoffzellen und/oder Batterien, insbesondere in Kraftfahrzeugen, besonders bevorzugt in Personen- und Nutzfahrzeuge, auf Basis von Alkylenglykolen oder deren Derivaten.

## Claims

1. A coolant composition having a conductivity of not more than 50 µS/cm for cooling systems in fuel cells and/or batteries, comprising
(a) from 10 to 90% by weight of at least one alkylene glycol or derivatives thereof,
(b) from 90 to 10% by weight of ion-free, preferably distilled, twice-distilled or deionized water,
(c) from 0.005 to 5% by weight, in particular from 0.0075 to 2.5% by weight, especially from 0.01 to 1% by weight, of one or more five-membered heterocyclic compounds (azole derivatives) which have 2 or 3 heteroatoms from the group consisting of nitrogen and sulfur and comprise no or at most one sulfur atom and can bear an aromatic or saturated six-membered fused-on ring, selected from the group consisting of annellated imidazoles and annellated 1,2,3-triazoles of the general formula 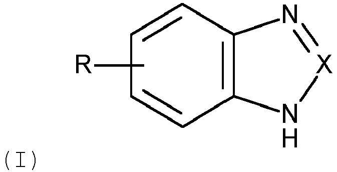 or 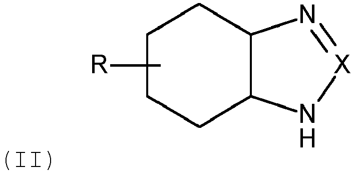 where the variable
R is hydrogen or a C₁-C₁₀-alkyl radical, in particular methyl or ethyl, and
the variable X is a nitrogen atom or the C-H group,
and also
benzothiazoles of the general formula (III) 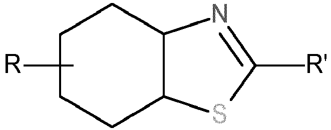 where
the variable R is as defined above and
the variable R' is hydrogen, a C₁-C₁₀-alkyl radical, in particular methyl or ethyl, or in particular a mercapto group (-SH),
(d) optionally at least one ortho-silicic ester, wherein it additionally comprises
(e) from 0.05 to 5% by weight, in particular from 0.1 to 1% by weight, especially from 0.2 to 0.5% by weight, of at least one of the compounds of the general formula (V) 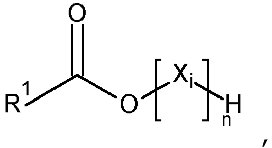 of the general formula (VI) 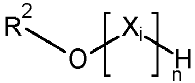 and of the general formula (VII) 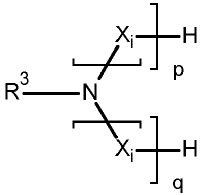 where
R¹ is an organic radical having from 7 to 21 carbon atoms, in particular an alkyl or alkenyl radical having from 7 to 21 carbon atoms, preferably from 9 to 19, particularly preferably from 11 to 19, very particularly preferably from 13 to 19, in particular from 15 to 19 and especially 17, carbon atoms,
R² is an organic radical having from 8 to 22 carbon atoms, in particular an alkyl or alkenyl radical having from 8 to 22 carbon atoms, preferably from 10 to 20, particularly preferably from 12 to 20, very particularly preferably from 14 to 20, in particular from 16 to 20 and especially 18, carbon atoms,
R³ is an organic radical having from 6 to 10 carbon atoms, in particular an alkyl or alkenyl radical having from 6 to 10 carbon atoms, preferably from 7 to 9 and particularly preferably 8, carbon atoms,
n is a positive integer from 10 to 60, preferably from 12 to 50, particularly preferably from 15 to 40, very particularly preferably from 18 to 30 and in particular from 20 to 25,
p and q are each, independently of one another, a positive integer from 1 to 40, preferably from 1 to 30, particularly preferably from 2 to 25, very particularly preferably from 3 to 20 and in particular from 5 to 15, and
each Xᵢ for i = 1 to n, 1 to p and 1 to q is selected independently from the group consisting of -CH₂-CH₂-O-, -CH₂-CH(CH₃)-O-, -CH(CH₃)-CH₂-O-, -CH₂-C (CH₃)₂-O-, -C(CH₃)₂-CH₂-O-, -CH₂-CH(C₂H₅)-O-, -CH(C₂H₅)-C H₂-O-, -CH(CH₃)-CH(CH₃)-O-, -CH₂-CH₂-CH₂-O- and -CH₂-CH₂ -CH₂-CH₂-O-, preferably selected from the group consisting of -CH₂-CH₂-O-, -CH₂-CH(CH₃)-O- and -CH(CH₃)-CH₂-O-, with particular preference being given to -CH₂-CH₂-O-, where the sum of all components here is 100% by weight.

2. The coolant composition according to claim 1, wherein at least one compound of the formula (V) is present.

3. The coolant composition according to claim 1, wherein the structural element R¹-COO- in the formula (V) is derived from acids selected from the group consisting of 2-ethylhexanoic acid, octanoic acid (caprylic acid), pelargonic acid (nonanoic acid), 2-propylheptanoic acid, decanoic acid (capric acid), undecanoic acid, dodecanoic acid (lauric acid), tridecanoic acid, tetradecanoic acid (myristic acid), pentadecanoic acid, palmitic acid (hexadecanoic acid), palmitoleic acid [(9Z)-hexadec-9-enoic acid], margaric acid (heptadecanoic acid), stearic acid (octadecanoic acid), oleic acid [(9*Z*)-octadec-9-enoic acid], elaidic acid [(9*E*)-octadec-9-enoic acid], linoleic acid [(9*Z*,12*Z*)-octadeca-9,12-dienoic acid], linolenic acid [(9*Z*,12*Z*,15*Z*)-octadeca-9,12,15-trienoic acid], eleostearic acid [(9*Z*,11*E*,13*E*)-octadeca-9,11,13-trienoic acid], ricinoleic acid ((R)-12-hydroxy-(Z)-octadec-9-enoic acid), isoricinoleic acid [(*S*)-9-hydroxy-(*Z*)-octadec-12-enoic acid], nonadecanoic acid, arachidic acid (eicosanoic acid), behenic acid (docosanoic acid) and erucic acid [(13*Z*)-docos-13-enoic acid].

4. The coolant composition according to claim 3, wherein the structural element R¹-COO- originates from fatty acid mixtures originating from the work-up of linseed oil, coconut oil, palm kernel oil, palm oil, soy oil, peanut oil, cocoa butter, shea butter, cottonseed oil, maize oil, sunflower oil, rapeseed oil or castor oil.

5. The coolant composition according to claim 1, wherein the structural element R²-O- in formula (VI) is derived from alcohols selected from the group consisting of octyl alcohol (capryl alcohol), nonyl alcohol (pelargonyl alcohol), decyl alcohol (capric alcohol), undecyl alcohol, dodecyl alcohol (lauryl alcohol), tridecyl alcohol, tetradecyl alcohol (myristyl alcohol), pentadecyl alcohol, hexadecyl alcohol (cetyl alcohol, palmityl alcohol), heptadecyl alcohol, octadecyl alcohol (stearyl alcohol), oleyl alcohol, elaidyl alcohol, linoleyl alcohol, linolenoyl alcohol, nonadecyl alcohol, eicosyl alcohol (arachyl alcohol) or mixtures thereof.

6. The coolant composition according to claim 1, wherein the structural element R²-O- in formula (VI) is derived from alcohols selected from the group consisting of 2-ethylhexanol, 2-propylheptanol, tridecanol isomer mixtures and heptadecanol isomer mixtures.

7. The coolant composition according to claim 1, wherein the structural element R²-O- in formula (VI) is derived from alkoxylated castor oils, preferably hydrogenated alkoxylated castor oils.

8. The coolant composition according to claim 1, wherein the structural element R³-N< in formula (VII) is derived from amines selected from the group consisting of n-hexylamine, 2-methylpentylamine, n-heptylamine, 2-heptylamine, isoheptylamine, 1-methylhexylamine, n-octylamine, 2-ethylhexylamine, 2-aminooctane, 6-methyl-2-heptylamine, n-nonylamine, isononylamine, n-decylamine and 2-propylheptylamine and mixtures thereof.

9. The coolant composition according to any of the preceding claims, wherein Xᵢ is -CH₂-CH₂-O-.

10. The coolant composition according to any of the preceding claims, wherein n in the formulae (V) and (VI) is from 18 to 60 and p and q in formula (VII) are each 1.

11. The coolant composition according to any of the preceding claims comprising benzimidazole, benzotriazole, tolutriazole, 2-mercaptobenzothiazole and/or hydrogenated tolutriazole as azole derivatives.

12. The coolant composition according to any of the preceding claims, additionally comprising ortho-silicic esters in such an amount that the silicon content in the ready-to-use aqueous coolant composition is from 2 to 2000 ppm by weight.

13. The coolant composition according to any of the preceding claims, having a conductivity of not more than 25 µS/cm.

14. A method for producing coolant compositions having a conductivity of not more than 50 µS/cm according to claim 1, wherein at least one antifreeze concentrate which is water-free or contains up to 10% by weight of water, comprising at least one alkylene glycol or derivatives thereof, further comprising one or more five-membered heterocyclic compounds (azole derivatives) which have 2 or 3 heteroatoms from the group consisting of nitrogen and sulfur and comprise no or at most one sulfur atom and can bear an aromatic or saturated six-membered fused-on ring, as defined in claim 1 or 11, additionally comprising at least one of the compounds of the general formula (V) 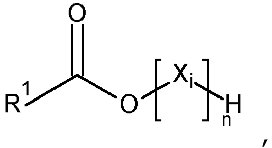 of the general formula (VI) 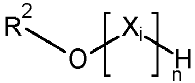 and of the general formula (VII) 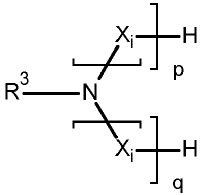 where
R¹ is an organic radical having from 7 to 21 carbon atoms, in particular an alkyl or alkenyl radical having from 7 to 21 carbon atoms, preferably from 9 to 19, particularly preferably from 11 to 19, very particularly preferably from 13 to 19, in particular from 15 to 19 and especially 17, carbon atoms,
R² is an organic radical having from 8 to 22 carbon atoms, in particular an alkyl or alkenyl radical having from 8 to 22 carbon atoms, preferably from 10 to 20, particularly preferably from 12 to 20, very particularly preferably from 14 to 20, in particular from 16 to 20 and especially 18, carbon atoms,
R³ is an organic radical having from 6 to 10 carbon atoms, in particular an alkyl or alkenyl radical having from 6 to 10 carbon atoms, preferably from 7 to 9 and particularly preferably 8, carbon atoms,
n is a positive integer from 10 to 60, preferably from 12 to 50, particularly preferably from 15 to 40, very particularly preferably from 18 to 30 and in particular from 20 to 25,
p and q are each, independently of one another, a positive integer from 1 to 40, preferably from 1 to 30, particularly preferably from 2 to 25, very particularly preferably from 3 to 20 and in particular from 5 to 15, and
each Xᵢ for i = 1 to n, 1 to p and 1 to q is selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅) -CH₂-O-, -CH(CH₃)-CH(CH₃)-O-, -CH₂-CH₂-CH₂-O- and -CH₂-CH₂-CH₂-CH₂-O-, preferably selected from the group consisting of -CH₂-CH₂-O-, -CH₂-CH(CH₃)-O- and -CH(CH₃)-CH₂-O-, with particular preference being given to -CH₂-CH₂-O-, is admixed with ion-free, preferably distilled, twice-distilled or deionized water.

15. A method for reducing nonferrous metal corrosion when using a coolant composition having a conductivity of not more than 50 µS/cm in fuel cells and/or batteries, comprising
(a) from 10 to 90% by weight of at least one alkylene glycol or derivatives thereof,
(b) from 90 to 10% by weight of ion-free, preferably distilled, twice-distilled or deionized water,
(c) from 0.005 to 5% by weight, in particular from 0.0075 to 2.5% by weight, especially from 0.01 to 1% by weight, of one or more five-membered heterocyclic compounds (azole derivatives) which have 2 or 3 heteroatoms from the group consisting of nitrogen and sulfur and comprise no or at most one sulfur atom and can bear an aromatic or saturated six-membered fused-on ring, as defined in claim 1 or 11,
(d) optionally at least one ortho-silicic ester, wherein the coolant composition additionally comprises (e) from 0.05 to 5% by weight, in particular from 0.1 to 1% by weight, especially from 0.2 to 0.5% by weight, of at least one of the compounds of the general formula (V) 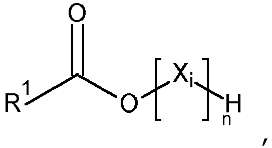 of the general formula (VI) 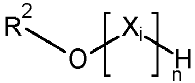 and of the general formula (VII) 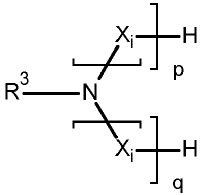 where
R¹ is an organic radical having from 7 to 21 carbon atoms, in particular an alkyl or alkenyl radical having from 7 to 21 carbon atoms, preferably from 9 to 19, particularly preferably from 11 to 19, very particularly preferably from 13 to 19, in particular from 15 to 19 and especially 17, carbon atoms,
R² is an organic radical having from 8 to 22 carbon atoms, in particular an alkyl or alkenyl radical having from 8 to 22 carbon atoms, preferably from 10 to 20, particularly preferably from 12 to 20, very particularly preferably from 14 to 20, in particular from 16 to 20 and especially 18, carbon atoms,
R³ is an organic radical having from 6 to 10 carbon atoms, in particular an alkyl or alkenyl radical having from 6 to 10 carbon atoms, preferably from 7 to 9 and particularly preferably 8, carbon atoms,
n is a positive integer from 10 to 60, preferably from 12 to 50, particularly preferably from 15 to 40, very particularly preferably from 18 to 30 and in particular from 20 to 25,
p and q are each, independently of one another, a positive integer from 1 to 40, preferably from 1 to 30, particularly preferably from 2 to 25, very particularly preferably from 3 to 20 and in particular from 5 to 15, and
each Xᵢ for i = 1 to n, 1 to p and 1 to q is selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH (C₂H₅) -CH₂-O-, -CH(CH₃)-CH(CH₃)-O-, -CH₂-CH₂-CH₂-O- and -CH₂-CH₂-CH₂-CH₂-O-, preferably selected from the group consisting of -CH₂-CH₂-O-, -CH₂-CH(CH₃)-O- and -CH(CH₃)-CH₂-O-, with particular preference being given to -CH₂-CH₂-O-, where the sum of all components here is 100% by weight.

16. An antifreeze concentrate which is water-free or contains up to 10% by weight of water, for use in a method according to claim 14, comprising at least one alkylene glycol or derivatives thereof, further comprising one or more five-membered heterocyclic compounds (azole derivatives) which have 2 or 3 heteroatoms from the group consisting of nitrogen and sulfur and comprise no or at most one sulfur atom and can bear an aromatic or saturated six-membered fused-on ring, as defined in claim 1 or 11, additionally comprising at least one of the compounds of the general formula (V) 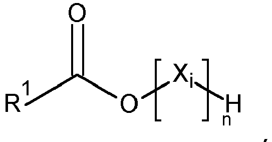 of the general formula (VI) 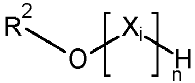 and of the general formula (VII) 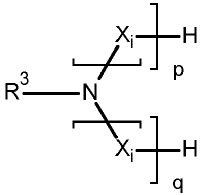 where
R¹ is an organic radical having from 7 to 21 carbon atoms, in particular an alkyl or alkenyl radical having from 7 to 21 carbon atoms, preferably from 9 to 19, particularly preferably from 11 to 19, very particularly preferably from 13 to 19, in particular from 15 to 19 and especially 17, carbon atoms,
R² is an organic radical having from 8 to 22 carbon atoms, in particular an alkyl or alkenyl radical having from 8 to 22 carbon atoms, preferably from 10 to 20, particularly preferably from 12 to 20, very particularly preferably from 14 to 20, in particular from 16 to 20 and especially 18, carbon atoms,
R³ is an organic radical having from 6 to 10 carbon atoms, in particular an alkyl or alkenyl radical having from 6 to 10 carbon atoms, preferably from 7 to 9 and particularly preferably 8, carbon atoms,
n is a positive integer from 10 to 60, preferably from 12 to 50, particularly preferably from 15 to 40, very particularly preferably from 18 to 30 and in particular from 20 to 25,
p and q are each, independently of one another, a positive integer from 1 to 40, preferably from 1 to 30, particularly preferably from 2 to 25, very particularly preferably from 3 to 20 and in particular from 5 to 15, and
each Xᵢ for i = 1 to n, 1 to p and 1 to q is selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅) -CH₂-O-, -CH(CH₃)-CH(CH₃)-O-, -CH₂-CH₂-CH₂-O- and -CH₂-CH₂-CH₂-CH₂-O-, preferably selected from the group consisting of -CH₂-CH₂-O-, -CH₂-CH(CH₃)-O- and -CH(CH₃)-CH₂-O-, with particular preference being given to -CH₂-CH₂-O-.

17. The use of at least one of the compounds (V), (VI) and/or (VII) as defined in any of the preceding claims, for producing antifreeze concentrates for cooling systems in fuel cells and/or batteries, in particular in motor vehicles, particularly preferably in passenger cars and commercial vehicles, based on alkylene glycols or derivatives thereof.

## Revendications

1. Compositions d'agent réfrigérant dotées d'une conductivité maximale de 50 µS/cm pour des systèmes de refroidissement dans des piles à combustible et/ou des batteries, contenant
(a) 10 à 90 % en poids d'au moins un alkylèneglycol ou de ses dérivés,
(b) 90 à 10 % en poids d'eau sans ions, préférablement distillée, bidistillée ou désionisée,
(c) 0,005 à 5 % en poids en particulier 0,0075 à 2,5 % en poids, avant tout 0,01 à 1 % en poids d'un ou plusieurs composés hétérocycliques à cinq chaînons (dérivés d'azole) comportant 2 ou 3 hétéroatomes du groupe composé par l'azote et le soufre, qui ne contiennent aucun atome de soufre ou contiennent au maximum un atome de soufre et qui peuvent porter un annelant à six chaînons aromatique ou saturé, choisis dans le groupe constitué par des imidazoles annelés et des 1,2,3-triazoles annelés de formule générale 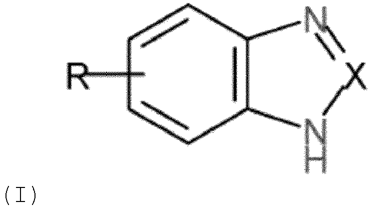 ou 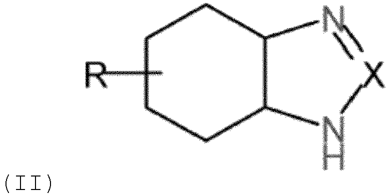 dans lesquelles la variable
R signifie hydrogène ou un radical alkyle en C₁ à C₁₀, en particulier méthyle ou éthyle, et
la variable X désigne un atome d'hydrogène ou le groupement C-H,
ainsi que
des benzothiazoles de formule générale (III) 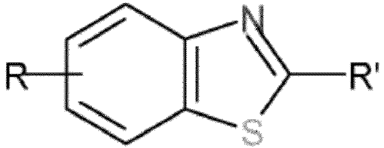 dans laquelle
la variable R possède la signification mentionnée ci-dessus et
la variable R' signifie hydrogène ou un radical alkyle en C₁ à C₁₀, en particulier méthyle ou éthyle, ou en particulier un groupe mercapto (-SH),
(d) éventuellement au moins un ester d'acide ortho-silicique
**caractérisées en ce qu'**elles contiennent, de plus,
(e) 0,05 à 5 % en poids, en particulier 0,1 à 1 % en poids, avant tout 0,2 à 0,5 % en poids d'au moins un des composés
de formule générale (V) 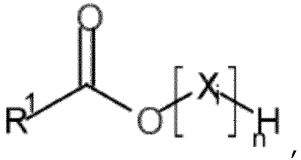 de formule générale (VI) 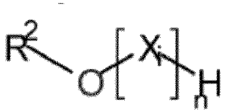 ainsi que de formule générale (VII) 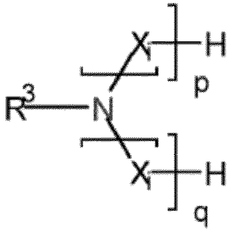 dans lesquelles
R¹ signifie un radical organique comportant 7 à 21 atomes de carbone, en particulier un radical alkyle ou alcényle comportant 7 à 21 atomes de carbone, préférablement 9 à 19, particulièrement préférablement 11 à 19, tout particulièrement préférablement 13 à 19, en particulier 15 à 19 et notamment 17 atomes de carbone,
R² signifie un radical organique comportant 8 à 22 atomes de carbone en particulier un radical alkyle ou alcényle comportant 8 à 22 atomes de carbone, préférablement 10 à 20, particulièrement préférablement 12 à 20, tout particulièrement préférablement 14 à 20, en particulier 16 à 20 et notamment 18 atomes de carbone,
R³ signifie un radical organique comportant 6 à 10 atomes de carbone, en particulier un radical alkyle ou alcényle comportant 6 à 10 atomes de carbone, préférablement 7 à 9 et particulièrement préférablement 8 atomes de carbone, n signifie un nombre entier positif de 10 à 60, préférablement de 12 à 50, particulièrement préférablement de 15 à 40, tout particulièrement préférablement de 18 à 30 et en particulier de 20 à 25, p et q signifient indépendamment l'un de l'autre un entier positif de 1 à 40, préférablement de 1 à 30, particulièrement préférablement de 2 à 25, tout particulièrement préférablement de 3 à 20 et en particulier de 5 à 15 et
chaque Xᵢ pour i = 1 à n, 1 à p et 1 à q est choisi indépendamment les uns des autres dans le groupe constitué par -CH₂-CH₂-O-, -CH₂-CH(CH-₃)-O-, -CH(CH₃)-CH₂-O-, -CH₂-C(CH₃)₂-O-, -C(CH₃)₂-CH₂-O-, -CH₂-CH(C₂H₅)-O-, - CH(C₂H₅)-CH₂-O-, -CH (CH₃)-CH (CH₃)-O-, -CH₂-CH₂-CH₂-O- et - CH₂-CH₂-CH₂-CH₂-O-, préférablement choisi dans le groupe constitué par -CH₂-CH₂-O-, -CH₂-CH(CH₃)-O- et -CH(CH₃)-CH₂-O-, particulièrement préférablement est -CH₂-CH₂-O-, la somme de tous les composants étant à cet égard 100 % en poids.

2. Compositions d'agent réfrigérant selon la revendication 1, **caractérisées en ce qu'**au moins un composé de formule (V) est présent.

3. Compositions d'agent réfrigérant selon la revendication 1, **caractérisées en ce que** l'élément structural R¹-COO dans la formule (V) est issu d'acides choisis dans le groupe constitué par l'acide 2-éthylhexanoïque, l'acide octanoïque (acide caprylique), l'acide pélargonique (acide nonanoïque), l'acide 2-propylheptanoïque, l'acide décanoïque (acide caprique), l'acide undécanoïque, l'acide dodécanoïque (acide laurique), l'acide tridécanoïque, l'acide tétradécanoïque (acide myristique), l'acide pentadécanoïque, l'acide palmitique (acide hexadécanoïque), l'acide palmitoléique [(9Z)-hexadéc-9-énoïque], l'acide margarique (acide heptadécanoïque), l'acide stéarique (acide octadécanoïque), l'acide oléique [(9Z)-octadéc-9-énoïque], l'acide élaïdique [(9E)-octadéc-9-énoïque], l'acide linoléique [acide (9Z, 12*Z*)-Octadéca-9,12-diénique], l'acide linolénique [acide (9*Z*, 12*Z*, 15*Z*)-octadéca-9,12,15-triénoïque], l'acide élaéostéarique [acide (9*Z*,11*E*,13*E*)-octadéca-9,11,13-triénoïque], l'acide ricinoléique ((R)-12-hydroxy-(Z)-octadéca-9-énoique), l'acide isoricinoléïque [acide (*S*)-9-hydroxy-(Z)-octadéca-12-énoïque], l'acide nonadécanoïque, l'acide arachidique (acide eicosanoïque), l'acide béhénique (acide docosanoïque) et l'acide érucique [(13Z)-docos-13-énoïque].

4. Compositions d'agent réfrigérant selon la revendication 3, **caractérisées en ce que** l'élément structural R¹-COO provient de mélanges d'acides gras, qui proviennent du traitement de l'huile de lin, de l'huile de coco, de l'huile de palmiste, de l'huile de palme, de l'huile de soja, de l'huile d'arachide, du beurre de cacao, du beurre de karité, de l'huile de coton, de l'huile de germes de maïs, de l'huile de tournesol, de l'huile de colza ou de l'huile de ricin.

5. Compositions d'agent réfrigérant selon la revendication 1, **caractérisées en ce que** l'élément structural R²-O dans la formule (VI) est issu d'alcools choisis dans le groupe constitué par l'alcool octylique (alcool caprylique), l'alcool nonylique (alcool pélargonylique), l'alcool décylique (alcool caprinique), l'alcool undécylique, l'alcool dodécylique (alcool laurique), l'alcool tridécylique, l'alcool tétradécylique (alcool myristylique), l'alcool pentadécylique, l'alcool hexadécylique (alcool cétylique, alcool palmitique), l'alcool heptadécylique, l'alcool octadécylique (alcool stéarylique), l'alcool oléylique, l'alcool élaïdylique, l'alcool linoléylique, l'alcool linolénylique, l'alcool nonadécylique, l'alcool eicosylique (alcool arachylique) ou leurs mélanges.

6. Compositions d'agent réfrigérant selon la revendication 1, **caractérisées en ce que** l'élément structural R²-O dans la formule (VI) est issu d'alcools choisis dans le groupe constitué par le 2-éthylhexanol, le 2-propylheptanol, des mélanges d'isomères de tridécanol et des mélanges d'isomères d'heptadécanol.

7. Compositions d'agent réfrigérant selon la revendication 1, **caractérisées en ce que** l'élément structural R²-O dans la formule (VI) est issu d'huiles de ricin alcoxylées, préférablement d'huiles de ricin alcoxylées hydrogénées.

8. Compositions d'agent réfrigérant selon la revendication 1, **caractérisées en ce que** l'élément structural R³-N< dans la formule (VII) est issu d'amines choisies dans le groupe constitué par la n-hexylamine, la 2-méthylpentylamine, la n-heptylamine, la 2-heptylamine, l'iso-heptylamine, la 1-méthylhexylamine, la n-octylamine, la 2-éthylhexylamine, le 2-aminooctane, la 6-méthyl-2-heptylamine, la n-nonylamine, l'iso-nonylamine, la n-décylamine et la 2-propylheptylamine ou leurs mélanges.

9. Compositions d'agent réfrigérant selon l'une quelconque des revendications précédentes, **caractérisées en ce que** Xᵢ représente -CH₂-CH₂-O-.

10. Compositions d'agent réfrigérant selon l'une quelconque des revendications précédentes, **caractérisées en ce que** n dans les formules (V) et (VI) représente 18 à 60 et p et q par la formule (VII) représentent 1.

11. Compositions d'agent réfrigérant selon l'une quelconque des revendications précédentes, contenant comme dérivés d'azole le benzimidazole, le benzotriazole, le tolutriazole, le 2-mercaptobenzothiazole et/ou le tolutriazol hydrogéné.

12. Compositions d'agent réfrigérant selon l'une quelconque des revendications précédentes, contenant, de plus, de l'ester d'acide ortho-silicique en une quantité telle que la teneur en silicium dans la composition aqueuse d'agent réfrigérant prête à l'emploi est de 2 à 2 000 ppm en poids.

13. Compositions d'agent réfrigérant selon l'une quelconque des revendications précédentes dotées d'une conductivité maximale de 25 µS/cm.

14. Procédé pour la préparation de compositions d'agent réfrigérant dotées d'une conductivité maximale de 50 µS/cm selon la revendication 1, **caractérisé en ce qu'**on mélange au moins un concentré d'agent de protection contre le gel, qui est anhydre ou qui contient jusqu'à 10 % en poids d'eau, contenant au moins un alkylèneglycol ou ses dérivés, contenant en outre un ou plusieurs composés hétérocycliques à cinq chaînons (dérivés d'azole) comportant 2 ou 3 hétéroatomes du groupe composé par l'azote et le soufre, qui ne contiennent aucun atome de soufre ou contiennent au maximum un atome de soufre et qui peuvent porter un annelant à six chaînons aromatique ou saturé, comme défini dans la revendication 1 ou 11, contenant, de plus, au moins un des composés de formule générale (V) 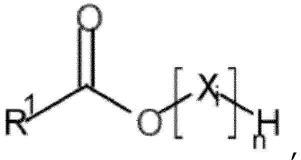 de formule générale (VI) 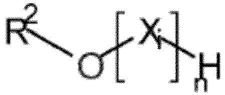 ainsi que de formule générale (VII) 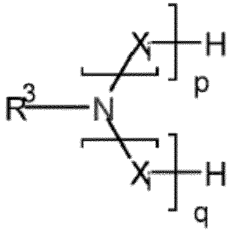 dans lesquelles
R¹ signifie un radical organique comportant 7 à 21 atomes de carbone, en particulier un radical alkyle ou alcényle comportant 7 à 21 atomes de carbone, préférablement 9 à 19, particulièrement préférablement 11 à 19, tout particulièrement préférablement 13 à 19, en particulier 15 à 19 et notamment 17 atomes de carbone,
R² signifie un radical organique comportant 8 à 22 atomes de carbone en particulier un radical alkyle ou alcényle comportant 8 à 22 atomes de carbone, préférablement 10 à 20, particulièrement préférablement 12 à 20, tout particulièrement préférablement 14 à 20, en particulier 16 à 20 et notamment 18 atomes de carbone,
R³ signifie un radical organique comportant 6 à 10 atomes de carbone, en particulier un radical alkyle ou alcényle comportant 6 à 10 atomes de carbone, préférablement 7 à 9 et particulièrement préférablement 8 atomes de carbone, n signifie un nombre entier positif de 10 à 60, préférablement de 12 à 50, particulièrement préférablement de 15 à 40, tout particulièrement préférablement de 18 à 30 et en particulier de 20 à 25, p et q signifient indépendamment l'un de l'autre un entier positif de 1 à 40, préférablement de 1 à 30, particulièrement préférablement de 2 à 25, tout particulièrement préférablement de 3 à 20 et en particulier de 5 à 15 et
chaque Xᵢ pour i = 1 à n, 1 à p et 1 à q est choisi indépendamment les uns des autres dans le groupe constitué par -CH₂-CH₂-O-, -CH₂-CH(CH-₃)-O-, -CH(CH₃)-CH₂-O-, -CH₂-C(CH₃)₂-O-, -C(CH₃)₂-CH₂-O-, -CH₂-CH(C₂H₅)-O-, - CH(C₂H₅)-CH₂-O-, -CH(CH₃)-CH(CH₃)-O-, -CH₂-CH₂-CH₂-O- et - CH₂-CH₂-CH₂-CH₂-O-, préférablement choisi dans le groupe constitué par -CH₂-CH₂-O-, -CH₂-CH(CH₃)-O- et -CH(CH₃)-CH₂-O-, particulièrement préférablement est -CH₂-CH₂-O-, avec de l'eau sans ions, préférablement distillée, bidistillée ou désionisée.

15. Procédé pour la réduction de la corrosion de métaux non ferreux par utilisation de compositions dotées d'une conductivité maximale de 50 µS/cm pour des systèmes de refroidissement dans des piles à combustible et/ou des batteries, contenant
(a) 10 à 90 % en poids d'au moins un alkylèneglycol ou de ses dérivés,
(b) 90 à 10 % en poids d'eau sans ions, préférablement distillée, bidistillée ou désionisée,
(c) 0,005 à 5 % en poids en particulier 0,0075 à 2,5 % en poids, avant tout 0,01 à 1 % en poids d'un ou plusieurs composés hétérocycliques à cinq chaînons (dérivés d'azole) comportant 2 ou 3 hétéroatomes du groupe composé par l'azote et le soufre, qui ne contiennent aucun atome de soufre ou contiennent au maximum un atome de soufre et qui peuvent porter un annelant à six chaînons aromatique ou saturé, comme défini dans la revendication 1 ou 11,
(d) éventuellement au moins un ester d'acide ortho-silicique
**caractérisé en ce que** la composition d'agent réfrigérant contient, de plus,
(e) 0,05 à 5 % en poids, en particulier 0,1 à 1 % en poids, avant tout 0,2 à 0,5 % en poids d'au moins un des composés
de formule générale (V) 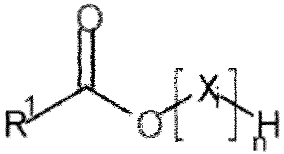 de formule générale (VI) 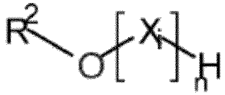 ainsi que de formule générale (VII) 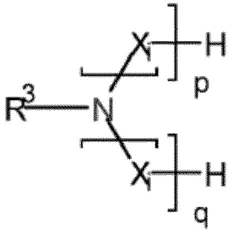 dans lesquelles
R¹ signifie un radical organique comportant 7 à 21 atomes de carbone, en particulier un radical alkyle ou alcényle comportant 7 à 21 atomes de carbone, préférablement 9 à 19, particulièrement préférablement 11 à 19, tout particulièrement préférablement 13 à 19, en particulier 15 à 19 et notamment 17 atomes de carbone,
R² signifie un radical organique comportant 8 à 22 atomes de carbone en particulier un radical alkyle ou alcényle comportant 8 à 22 atomes de carbone, préférablement 10 à 20, particulièrement préférablement 12 à 20, tout particulièrement préférablement 14 à 20, en particulier 16 à 20 et notamment 18 atomes de carbone,
R³ signifie un radical organique comportant 6 à 10 atomes de carbone, en particulier un radical alkyle ou alcényle comportant 6 à 10 atomes de carbone, préférablement 7 à 9 et particulièrement préférablement 8 atomes de carbone, n signifie un nombre entier positif de 10 à 60, préférablement de 12 à 50, particulièrement préférablement de 15 à 40, tout particulièrement préférablement de 18 à 30 et en particulier de 20 à 25, p et q signifient indépendamment l'un de l'autre un entier positif de 1 à 40, préférablement de 1 à 30, particulièrement préférablement de 2 à 25, tout particulièrement préférablement de 3 à 20 et en particulier de 5 à 15 et
chaque Xᵢ pour i = 1 à n, 1 à p et 1 à q est choisi indépendamment les uns des autres dans le groupe constitué par -CH₂-CH₂-O-, -CH₂-CH(CH-₃)-O-, -CH(CH₃)-CH₂-O-, -CH₂-C(CH₃)₂-O-, -C(CH₃)₂-CH₂-O-, -CH₂-CH(C₂H₅)-O-, - CH(C₂H₅)-CH₂-O-, -CH(CH₃)-CH(CH₃)-O-, -CH₂-CH₂-CH₂-O- et - CH₂-CH₂-CH₂-CH₂-O-, préférablement choisi dans le groupe constitué par -CH₂-CH₂-O-, -CH₂-CH(CH₃)-O- et -CH(CH₃)-CH₂-O-, particulièrement préférablement est -CH₂-CH₂-O-, la somme de tous les composants étant à cet égard 100 % en poids.

16. Concentré d'agent de protection contre le gel qui est anhydre ou contient jusqu'à 10 % en poids d'eau, pour un emploi dans un procédé selon la revendication 14, contenant au moins un alkylèneglycol ou ses dérivés, contenant en outre un ou plusieurs composés hétérocycliques à cinq chaînons (dérivés d'azole) comportant 2 ou 3 hétéroatomes du groupe composé par l'azote et le soufre, qui ne contiennent aucun atome de soufre ou contiennent au maximum un atome de soufre et qui peuvent porter un annelant à six chaînons aromatique ou saturé, comme défini dans la revendication 1 ou 11, contenant, de plus, au moins un des composés de formule générale (V) 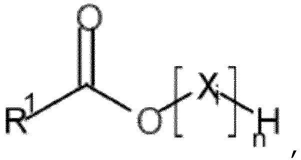 de formule générale (VI) 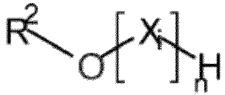 ainsi que de formule générale (VII) 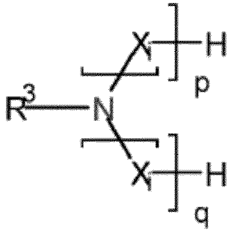 dans lesquelles
R¹ signifie un radical organique comportant 7 à 21 atomes de carbone, en particulier un radical alkyle ou alcényle comportant 7 à 21 atomes de carbone, préférablement 9 à 19, particulièrement préférablement 11 à 19, tout particulièrement préférablement 13 à 19, en particulier 15 à 19 et notamment 17 atomes de carbone,
R² signifie un radical organique comportant 8 à 22 atomes de carbone en particulier un radical alkyle ou alcényle comportant 8 à 22 atomes de carbone, préférablement 10 à 20, particulièrement préférablement 12 à 20, tout particulièrement préférablement 14 à 20, en particulier 16 à 20 et notamment 18 atomes de carbone,
R³ signifie un radical organique comportant 6 à 10 atomes de carbone, en particulier un radical alkyle ou alcényle comportant 6 à 10 atomes de carbone, préférablement 7 à 9 et particulièrement préférablement 8 atomes de carbone, n signifie un nombre entier positif de 10 à 60, préférablement de 12 à 50, particulièrement préférablement de 15 à 40, tout particulièrement préférablement de 18 à 30 et en particulier de 20 à 25, p et q signifient indépendamment l'un de l'autre un entier positif de 1 à 40, préférablement de 1 à 30, particulièrement préférablement de 2 à 25, tout particulièrement préférablement de 3 à 20 et en particulier de 5 à 15 et
chaque Xᵢ pour i = 1 à n, 1 à p et 1 à q est choisi indépendamment les uns des autres dans le groupe constitué par -CH₂-CH₂-O-, -CH₂-CH(CH-₃)-O-, -CH(CH₃)-CH₂-O-, -CH₂-C(CH₃)₂-O-, -C(CH₃)₂-CH₂-O-, -CH₂-CH(C₂H₅)-O-, - CH(C₂H₅)-CH₂-O-, -CH(CH₃)-CH(CH₃)-O-, -CH₂-CH₂-CH₂-O- et - CH₂-CH₂-CH₂-CH₂-O-, préférablement choisi dans le groupe constitué par -CH₂-CH₂-O-, -CH₂-CH(CH₃)-O- et -CH(CH₃)-CH₂-O-, particulièrement préférablement est -CH₂-CH₂-O-

17. Utilisation d'au moins un des composés (V), (VI) et/ou (VII) comme définis dans l'une quelconque des revendications précédentes, pour la préparation de concentrés d'agent de protection contre le gel pour des systèmes de refroidissement dans des piles à combustible et/ou des batteries, en particulier dans des véhicules à moteur, particulièrement préférablement dans des véhicules de tourisme et des véhicules utilitaires, à base d'alkylèneglycols ou de leurs dérivés.
